# EUROPÄISCHE PATENTSCHRIFT

(11) **EP 1 937 692 B1**
(45) Veröffentlichungstag und Bekanntmachung des Hinweises auf die Patenterteilung: **25.09.2013**
(21) Anmeldenummer: 06807317.0
(22) Anmeldetag: 16.10.2006
(51) Int. Cl.: C07F 3/02, C07B 49/00

(54) **VERFAHREN ZUR HERSTELLUNG VON DIORGANOMAGNESIUMHALTIGEN SYNTHESEMITTELN**
METHOD FOR PREPARING DIORGANOMAGNESIUM-CONTAINING SYNTHESIS MEANS
PROCEDE DE PRODUCTION D'AGENTS DE SYNTHESE A BASE DE DIORGANOMAGNESIUM

(30) Priorität: 14.10.2005 DE 102005049635; 24.05.2006 DE 102006024915
(43) Veröffentlichungstag der Anmeldung: 02.07.2008
(73) Patentinhaber: Chemetall GmbH, 60487 Frankfurt am Main (DE)
(72) Erfinder: LANG, Sebastian, 64347 Griesheim (DE); MURSO, Alexander, 60489 Frankfurt am Main (DE); WIETELMANN, Ulrich, 61381 Friedrichsdorf (DE); LISCHKA, Uwe, 60437 Frankfurt am Main (DE); RÖDER, Jens, 68167 Mannheim (DE)
(74) Vertreter: Uppena, Franz
(86) Internationale Anmeldenummer: PCT/EP2006/067464
(87) Internationale Veröffentlichungsnummer: WO 2007/042578

(56) Entgegenhaltungen:
- EP-A- 0 285 374

## Beschreibung

Gegenstand der vorliegenden Erfindung ist ein diorganomagnesiumhaltiges Synthesemittel, ein Verfahren zu dessen Herstellung und die Verwendung dieses Synthesemittels.

Insbesondere Gegenstand der vorliegenden Erfindung ist einen Verfahren zur Herstellung von Mischungen von diorganomagnesiumhaltigen Synthesemitteln mit Alkalisalzen zur Verwendung in der organischen und metallorganischen Synthesechemie, beispielsweise in Halogen/Metall-Austauschreaktionen oder Transmetallierungsreaktionen, oder in Metallierungsreaktionen.

Organomagnesiumverbindungen finden in der chemischen Synthese vielfältige Anwendungen (H. G. Richey, Jr., Grignard Reagents New Developments, John Wiley and Sons, 2000; G. S. Silvermann, P. E. Rakita, Handbook of Grignard Reagents, Marcel Dekker Inc., 1996). Hinsichtlich der Reaktivität sind sich Grignardverbindungen RMgX und Diorganomagnesiumverbindungen R¹R²Mg sehr ähnlich (K. Nützel, Methoden der organischen Chemie, Metallorganische Verbindungen (Houben-Weyl, Ed.: E. Müller, O. Bayer), Thieme Verlag Stuttgart, 1973, Band XIII/2a, Auflage 4, S. 197 ff.). Mischungen von Diorganomagnesiumverbindungen mit Alkalimetallorganylen zeigen teilweise eine höhere Reaktivität, die in der Synthesechemie gerne ausgenutzt wird (K. Kitigawa, A. Inoue, H. Shinokubo, K. Oshima, Angew. Chem. 2000, 112, 2594; A. Inoue, K. Kitagawa, H. Shinokubo, K. Oshima, J. Org. Chem. 2001, 66, 4333; A. Inoue, K. Kitagawa, H. Shinokubo, K. Oshima, Tetrahedron 2000, 56, 9601).

So sind unter anderem Mischungen von Grignard- oder Dialkylmagnesiumverbindungen und Lithiumchlorid LiCl als hochpotentes Reagenz für Halogen/Metall-Austauschreaktionen offenbart. Durch Umsetzung dieser Mischungen mit beispielsweise Arylhalogeniden sind neue magnesiumorganische Verbindungen zugänglich, die über andere Verfahren nicht oder nur schwer darstellbar sind (P. Knochel et al., EP-A-04008081; P. Knochel et al., EP-A-1582524; P. Knochel et al., Angew. Chem. Int. Ed. 2003, 42, 4302; A. Krasovskiy et al., Angew. Chem. Int. Ed. 2004, 43, 3333; P. Knochel et al., Chem. Commun. 2004, 2288; P. Knochel et al., Org. Lett. 2004, 6, 4215; P. Knochel, Chem. Commun. 2005, 543; P. Knochel, Angew. Chem. Int. Ed. 2005, 44, 1654; P. Knochel et al., Angew. Chem. Int. Ed. 2005, 44, 3133).

Der Vorteil der Verwendung dieser Dialkylmagnesium/LiCl-Mischungen in Halogen/Metall-Austauschreaktionen gegenüber Mischungen aus Alkylmagnesiumhalogeniden und Lithiumchlorid liegt darin, dass die Umwandlungsgeschwindigkeit deutlich erhöht ist, nicht aktivierte organische Verbindungen umgesetzt werden können und zudem nur die Hälfte an Dialkylmagnesiumverbindung eingesetzt werden muss, da beide Alkylsubstituenten an der Austauschreaktion beteiligt sind. Durch Verwendung von Dialkylmagnesium/LiCl-Mischungen kann also die Wirtschaftlichkeit einer Halogen/Metall-Austauschreaktion deutlich gesteigert werden. Die Anwendung dieser Methode setzt jedoch die Verfügbarkeit einer Diorganomagnesiumverbindung und deren Mischung mit einem Lithiumsalz voraus.

Die Herstellung von diorganomagnesiumhaltigen Synthesemitteln einerseits und deren Mischungen mit Alkalisalzen andererseits gestaltet sich nach dem Stand der Technik jedoch aufwendig.

Die bekannten Methoden zur Herstellung von diorganomagnesiumhaltigen Synthesemitteln sind nachfolgend beschrieben.

Durch Transmetallierung von Diorganoquecksilberverbindungen mit Magnesium entstehen Diorganomagnesiumverbindungen, wie in Abbildung 1 dargestellt. Dieses Verfahren bedingt jedoch die Herstellung und Verfügbarkeit einer Diorganoquecksilberverbindung. Diese Quecksilberverbindungen sind zudem außerordentlich toxisch (H. C. Holtkamp et al., J. Organomet Chem. 1969, 19, 279).

### Abbildung 1: Transmetallierungsreaktion zur Herstellung von R₂Mg-Verbindungen:

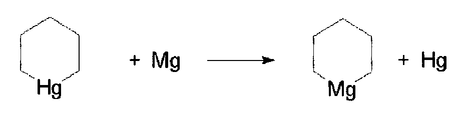

Durch Reaktion von lithiumorganischen Verbindungen mit Organomagnesiumhalogeniden entstehen Diorganomagnesiumverbindungen unter Bildung von Lithiumhalogeniden, wie in Abbildung 2 dargestellt (C. W. Kamienski et al., J. Organomet. Chem. 1967, 8, 542). Durch Verwendung eines Überschusses an lithiumorganischen Verbindungen oder Grignardverbindungen entstehen Mischungen aus Diorganomagnesiumverbindungen mit Lithiumorganylen oder Grignardverbindungen.

### Abbildung 2: Umsetzung von Grignardverbindungen mit Lithiumorganylen:

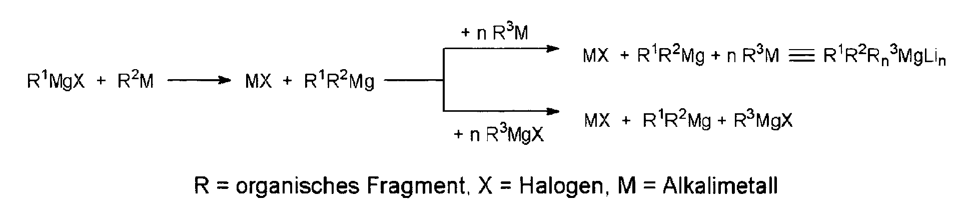

Diese Methode setzt die Verfügbarkeit einer entsprechenden lithiumorganischen Verbindung voraus. Viele lithiumorganische Verbindungen sind jedoch in aprotischen organischen Lösemitteln oder auch in etherhaltigen aprotischen organischen Lösemittelgemischen entweder nicht erhältlich oder nur bedingt stabil. Durch Anwendung des oben beschriebenen Verfahrens werden diorganomagnesiumhaltige Synthesemittel meistens in etherhaltigen Lösemittelgemischen erhalten, was in weiteren Umsetzungen die Selektivität einer Reaktion beeinträchtigen kann oder auch die Reaktivität des diorganomagnesiumhaltigen Synthesemittels beeinträchtigen kann. In manchen Fällen kann der Ether je nach Koordinationsstärke durch Zugabe von höher siedenden Kohlenwasserstoffen komplett destillativ entfernt werden. Dies gelingt beispielsweise bei der Herstellung von Dibutyl-(2)-magnesium. Jedoch muss während der Destillation stetig Kohlenwasserstoff nachgegeben werden. Eine Herstellung von Diorganomagnesiumverbindungen in nur einem Lösemittel verbraucht dementsprechend viel Lösemittel und ist daher unwirtschaftlich.

Eine Herstellung von beispielsweise Mischungen aus Di-(2)-butylmagnesium mit Lithiumchlorid zur Anwendung in Halogen/Metall-Austauschreaktionen durch Reaktion von 2-Butylmagnesiumchlorid mit 2-Butyllithium ist bei Verwendung von technisch verfügbaren verdünnten Lösungen von 2-Butyllithium (12% in Cyclohexan) und von 2-Butylmagnesiumchlorid (25% in Tetrahydrofuran (THF)) nicht direkt möglich, da das gebildete Lithiumchlorid im cyclohexanreichen Lösemittelgemisch ausfällt und somit zur Beschleunigung von Austauschreaktionen nicht mehr zur Verfügung steht. Wird dieser Suspension beispielsweise THF zugesetzt, geht das gebildete Lithiumchlorid in Lösung, jedoch werden so extrem verdünnte Di-(2)-butylmagesium/LiCl-Mischungen erhalten, was eine Anwendung in Austauschreaktionen unwirtschaftlich macht. Es kann zwar eine konzentriertere Lösung von 2-Butyllithium in beispielsweise Cyclohexan verwendet werden, um direkt zu den gewünschten Di-(2)-butylmagnesium/LiCl-Mischungen zu gelangen, jedoch sind diese Konzentrate pyrophor, nur bedingt stabil und schwer zu handhaben. In Gegenwart von Ethern wird zudem selbst bei tieferen Temperaturen Etherspaltung beobachtet, was zu unerwünschten Nebenprodukten und Ausbeuteverlusten führt.

Wie in Abbildung 3 dargestellt, liegen Organomagnesiumhalogenide in Lösung gemäß W. Schlenk in folgendem Gleichgewicht vor (W. Schlenk et al, Berichte 1929, 62, 920; W Schlenk, Berichte 1931, 64, 734):

### Abbildung 3: Schlenk-Gleichgewicht:

2 RMgX ⇆ R₂Mg x MgX₂

R₂Mg x MgX₂ ⇆ R₂Mg + MgX₂↓

R = organisches Fragment, X = Halogen

Durch Zugabe spezieller Lösemittel wie beispielsweise Pyridin, Kronenether, Dioxan, Tetramethylethylendiamin (TMEDA) oder Dimethylether (DME) wird das Gleichgewicht in Richtung der Diorganomagnesiumverbindung verschoben. Nach Abtrennung des ausgefallenen schwerlöslichen Magnesiumhalogenids können somit Diorganomagnesiumverbindungen oder deren Mischungen mit Grignardverbindungen erhalten werden, wie in Abbildung 4 dargestellt:

### Abbildung 4: Diorganomagnesiumverbindung über Verschiebung des Schlenk-Gleichgewichtes:

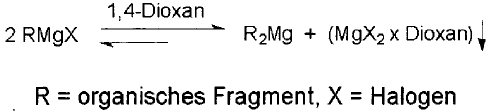

Es ist jedoch bekannt, dass die Verschiebung des Gleichgewichtes stark abhängig ist von der Wahl des Lösemittels, der Temperatur, der Zeit der Einwirkung des Lösemittels auf die Grignardverbindung und der Konzentration der Lösung. Eine nahezu vollständige Ausfällung des Magnesiumhalogenids ist nur schwer möglich. Es ist daher technisch anspruchsvoll, reproduzierbar definierte Produkte zu erhalten. Zudem bedingt dieses Verfahren die Verwendung von exotischen Lösemitteln, die technisch nur selten Anwendung finden, und die teilweise toxisch oder kanzerogen sind.

Diorganomagnesiumverbindungen können auch durch Umsetzung von Magnesiumhydrid MgH₂ mit Alkenen, die aktivierte Doppelbindungen enthalten, dargestellt werden, wie in Abbildung 5 dargestellt:

### Abbildung 5: Umsetzung von MgH₂ mit Alkenen:

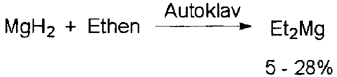

Die Ausbeuten von Diorganomagnesiumverbindungen, hergestellt über diese Methode, sind gering. Zudem bedingt dieses Verfahren hohe Drücke und Temperaturen. Dadurch finden Nebenreaktionen statt und das Rohprodukt muss technisch aufwendig gereinigt werden.

Eine weitere Methode wird in EP-B-0285374 beschrieben. Durch Reaktion eines Alkylhalogenids mit einer Mischung aus beispielsweise Lithium und Magnesium in Kohlenwasserstoffen, die 0,05 bis 2 Mol-Äquivalente einer Lewis-Base pro Mol metallorganischer Zusammensetzung enthalten, entstehen Mischungen aus Lithiumorganylen und Diorganomagnesiumverbindungen, wie in Abbildung 6 dargestellt.

### Abbildung 6: Mischungen aus Lithiumorganylen und Diorganomagnesiumverbindungen:

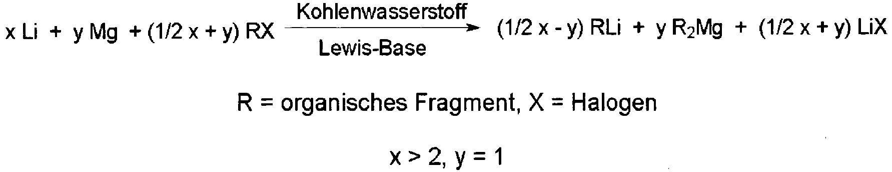

Dieses Verfahren hat den Nachteil, dass in Gemischen aus Kohlenwasserstoffen und Lewis-Basen, beispielsweise THF, gearbeitet wird. Das Produkt liegt also in einem Lösemittelgemisch vor. Dies wirkt sich in der Synthesechemie oftmals nachteilig aus, da beispielsweise veränderte Selektivitäten oder Reaktivitäten erhalten werden. Zudem ist bekannt, dass bei Unter- oder Überschreiten einer definierten Menge an Lewis-Base schlechtere Ausbeuten, beispielsweise aufgrund von Nebenreaktionen wie Etherspaltung, erhalten werden. Aufgrund der höheren Reaktivität von Lithium im Vergleich zu Magnesium reichert sich hauptsächlich zu Beginn der Reaktion eine lithiumorganische Verbindung in der Reaktionsmischung an. Es ist jedoch bekannt, dass viele lithiumorganische Verbindungen, wie beispielsweise sec-Buthyllithium, in Lösemitteln, die Lewis-Basen enthalten, nur bedingt stabil sind und mit der Lewis-Base reagieren. Dadurch entstehen unerwünschte Nebenprodukte und die Ausbeute verringert sich dementsprechend. Das Verfahren ist daher nur bedingt anwendbar. Außerdem werden nach diesem Verfahren aufgrund der schlechten Löslichkeit von Lithiumsalzen in Lösemitteln, die nur geringe Mengen an Lewis-Base enthalten, nur lithiumsalzarme oder -freie diorganomagnesiumhaltige Synthesemittel erhalten, die zur Anwendung beispielsweise in Halogen/Metall-Austauschreaktionen nicht geeignet sind.

Ein weiteres Verfahren ist in US-A-5171467 offenbart. Auch hier findet die Reaktion in Lösemittelgemischen aus Kohlenwasserstoffen und Ethern statt. Das Verfahren wird anhand Abbildung 7 beispielhaft erläutert.

### Abbildung 7: Herstellung von Diorganomagnesiumverbindungen über Magnesiumhalogenide:

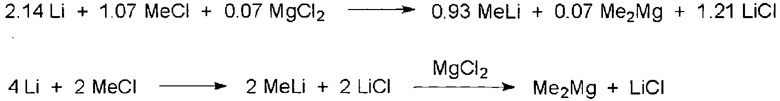

Wie dargestellt entsteht bei der Synthese intermediär eine lithiumorganische Verbindung, die anschließend mit Magnesiumchlorid reagiert. In der Synthese muss daher wasserfreies Magnesiumchlorid verwendet werden, um eine partielle Hydrolyse der lithiumorganischen Verbindung zu verhindern, was zu einem Ausbeuteverlust führen würde. Wasserfreies Magnesiumchlorid muss technisch aufwendig in situ hergestellt werden oder bei hohen Temperaturen lange Zeit getrocknet werden. Beides wirkt sich nachteilig auf die Wirtschaftlichkeit dieser Methode aus. Eine reine Diorganomagnesiumverbindung kann zudem nur bei Verwendung eines Überschusses an trockenem Magnesiumhalogenid erhalten werden. Werden Magnesiumhalogenide in unterstöchiometrischen Mengen verwendet, bildet sich eine Mischung aus einer Diorganomagnesiumverbindung und einem Lithiumorganyl.

Wie bereits oben beschrieben, ist bekannt, dass viele Lithiumorganyle in etherhaltigen Lösemittelgemischen aufgrund von Etherspaltung nur bedingt stabil sind. Es finden Nebenreaktionen statt, die zu unerwünschten Nebenprodukte und schlechteren Ausbeuten führen. Das Verfahren ist daher nur bedingt anwendbar. Magnesiumchlorid ist in Mischungen aus Kohlenwasserstoffen und Ethern nur schwer löslich, was zu einer langsameren Reaktion der lithiumorganischen Verbindung mit Magnesiumchlorid führt. Es sind lange Reaktionszeiten nötig, was Nebenreaktionen, beispielsweise Etherspaltung, begünstigt. Zudem werden nach diesem Verfahren ebenfalls nur lithiumsalzarme oder -freie diorganomagnesiumhaltige Synthesemittel erhalten, die wie beschrieben nur begrenzt anwendbar sind.

Neben diesen Methoden existieren noch weitere, die jedoch nur zur Synthese von speziellen magnesiumorganischen Verbindungen geeignet sind. Eine direkte Herstellung von magnesiumorganischen Verbindungen aus Magnesium und organischen Halogeniden ist nur in seltenen Fällen möglich. Beispielsweise gelingt diese im Falle von Di-(2)-butylmagnesium, Butylethylmagnesium, Butyloctylmagnesium, n-Butyl-sec-Butylmagnesium. Die Herstellung dieser Verbindungen ist jedoch nur unter energetisch sehr ungünstigen Bedingungen durchzuführen. So müssen die zur Synthese verwendeten Alkylhalogenide teilweise unter hohem Druck zu der kochenden Suspension aus Lösemittel und feinstem Magnesiumpulver dosiert werden. Da bei den sehr hohen Reaktionstemperaturen auch Nebenreaktionen stattfinden, werden hierbei auch immer gasförmige Alkene aus β-H-Eliminierungs-reaktionen in die Umwelt abgegeben. So ist bekannt, dass bei der Synthese von Dibutylmagnesium größere Mengen Buten gebildet werden. Auch ist bekannt, dass die auf diesem Weg hergestellten Dialkylmagnesiumverbindungen teilweise eine geringe Löslichkeit im verwendeten Lösemittel haben. Daher muss nach Möglichkeit immer Octylchlorid zur Bildung von octylhaltigen Dialkylmagnesiumverbindungen zugesetzt werden. Hierdurch wird zwar einerseits die Löslichkeit der Verbindung erhöht, andererseits kann auf diesem Wege kein definiertes Produkt hergestellt werden. Ebenfalls ist bekannt, dass Lösungen der so hergestellten Dialkylmagnesiumverbindungen durch Bildung von Koordinationspolymeren, immer eine sehr hohe Viskosität aufweisen, so dass grundsätzlich Hilfsmittel wie Aluminiumalkyle zur Verringerung der Viskosität zugesetzt werden müssen. Dies beeinträchtigt jedoch erheblich die Reinheit. Zudem sind aufgrund der in Abbildung 8 dargestellten langsamen oxidativen Addition beider nötiger Äquivalente von Alkylhalogenid an Magnesium lange Reaktionszeiten nötig (Magnesium Alkyls from Akzo Nobel, 1999: Metal Alkyls from Akzo Nobel, 2003; M. de Vries, Stamicarbon N. V. 1969, US-A-3737393; Zn-Zusätze: G. W. Knight, L. Jackson, D. E. Mach, Dow Chemical Comp. 1975, US-A- 4213880; SiOR₄-Zusatz: Akzo Nobel 1997, WO-A-99/09035; GaR3, InR3, RLi: L. W. Fannin, D. B. Malpass, R. Sanchez; Texas Alkyls 1980, US-A-4299781; C. W. Kamiensky, B. J. McElroy, R. O. Bach, Lithium Corp. of America 1976 US-A-4069267; L. W. Fannin, D. B. Malpass, Texas Alkyls 1977, US-A-4127507;D. B. Malpass, D. W. Webb, Texas Alkyls 1984, US-A-4547477).

### Abbildung 8: Synthese von R₂Mg-Verbindungen aus Magnesium und organischen Halogeniden am Beispiel von Di-(2)-butylmagnesium:

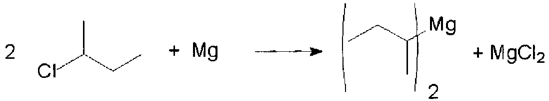

Mischungen aus Diorganomagnesiumverbindungen und Alkalimetallorganylen werden gemäß Abbildung 9 durch Umsetzung von Diorganomagnesiumverbindungen mit Alkalimetallen erhalten (D. B. Malpass, J. F. Eastham, J. Org. Chem. 1973, 21, 3718).

### Abbildung 9: Mischungen aus Diorganomagnesiumverbindungen und Alkalimetallorganylen:

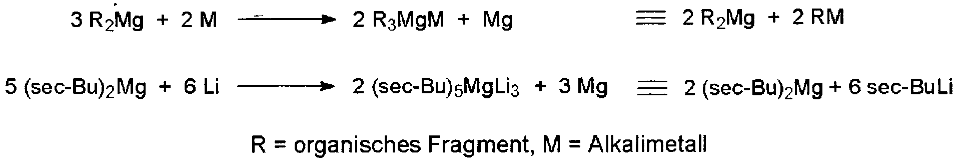

Dieses Verfahren setzt jedoch die Verfügbarkeit einer Diorganomagnesiumverbindung voraus. Wie gezeigt, gestaltet sich die Herstellung dieser Verbindungen nach Methoden des Standes der Technik jedoch schwierig.

Die Geschwindigkeit von Halogen/Metall-Austauschreaktionen kann durch Verwendung von beispielsweise Mischungen aus Grignardverbindungen oder Diorganomagnesiumverbindungen mit Lithiumsalzen drastisch erhöht werden. Durch Zusatz von Lithiumsalzen zu den oben beschriebenen Verbindungen können Reagenzien hergestellt werden, die über andere Verfahren aufgrund von Nebenreaktionen oder langen Reaktionszeiten technisch nicht oder nur schwer darstellbar sind. In allen oben beschriebenen Darstellungsmöglichkeiten von Diorganomagnesiumverbindungen, die nicht von Lithiumorganylen oder Lithium-metall ausgehen, muss daher in einem weiteren Verfahrensschritt ein Lithiumsalz, beispielsweise Lithiumchlorid zugesetzt werden. Aufgrund der schlechten Löslichkeit des Lithiumsalzes im verwendeten Lösemittel oder Lösemittelgemisch muss teilweise muss zusätzlich ein Lösemitteltausch erfolgen.

Werden magnesiumorganische Verbindungen über Lithiumorganyle oder unter Verwendung von Lithiummetall hergestellt, entsteht in situ ein Lithiumsalz. Da in den beschriebenen Verfahren jedoch aufgrund der Durchführbarkeit der Methoden, der mangelnden Stabilität oder mangelnden Löslichkeit des entstehenden Lithiumorganyls in Kohlenwasserstoffen oder in Ether/Kohlenwasserstoffmischungen gearbeitet werden muss, fällt ein großer Teil des gebildeten Lithiumsalzes aus. Durch Zugabe von polaren Lösemitteln kann dieses zwar wieder in Lösung gebracht werden, jedoch entstehen dabei verdünnte Lösungen, deren Einsatz in der Synthesechemie unwirtschaftlich ist. Um dennoch lithiumsalzhaltige Mischungen zu erhalten, ist auch hier in einem weiteren Verfahrensschritt ein Lösemitteltausch nötig. Zudem wird teilweise die Verfügbarkeit und Stabilität einer lithiumorganischen Verbindung vorausgesetzt.

Lithiumchlorid ist sehr hygroskopisch, was eine nachträgliche Einbringung in magnesiumorganische Verbindungen erschwert. Wird wasserhaltiges oder leicht feuchtes Lithiumchlorid verwendet, so findet eine partielle Hydrolyse der magnesiumorganischen Verbindungen statt. Dadurch entstehen unerwünschte Nebenprodukte und die Ausbeute an magnesiumorganischen Verbindungen reduziert sich dem entsprechend.

Alle aufgeführten Verfahren zur Herstellung von diorganomagnesiumhaltigen Synthesemitteln oder deren Mischungen mit Alkalimetallsalzen sind entweder teuer, erfordern die Handhabung von pyrophoren oder auch toxischen Verbindungen, gehen von zum Teil nicht kommerziell erhältlichen metallorganischen Verbindung oder nur bedingt stabilen metallorganischen Verbindungen aus, bedingen mehrere Verfahrensschritte, führen zur Bildung von unerwünschten Nebenprodukten oder sind nur begrenzt anwendbar. Die Aufgabe, ein technisch realisierbares, effizientes, einfaches und kostengünstiges Verfahren zur Herstellung von diorganomagnesiumhaltigen Synthesemitteln und deren Mischungen mit Alkalisalzen aufzuzeigen, ist somit bisher nicht gelöst.

Aufgabe der vorliegenden Erfindung ist es daher, ein Verfahren zur Herstellung von diorganomagnesiumhaltigen Synthesemitteln bereitzustellen, das die Nachteile des Standes der Technik überwindet.

Insbesondere Aufgabe der vorliegenden Erfindung ist es, ein Verfahren bereitzustellen, das gleich- oder verschiedenartig substituierte diorganomagnesiumhaltige Synthesemittel in nur einem definierten Lösemittel oder in definierten Lösemittelgemischen, und das direkt alkalisalzhaltige Lösungen aber auch alkalimetallsalzarme oder -freie Lösungen von diorganomagnesiumhaltigen Synthesemitteln in definierten Lösemitteln oder Lösemittelgemischen liefert.

Erfindungsgemäß wird die Aufgabe überraschenderweise durch die Merkmale des Hauptanspruchs gelöst. Vorzugsweise Ausgestaltungen finden sich in den Unteransprüchen.

Das erfindungsgemäße Verfahren ermöglicht überraschenderweise die Herstellung einer Vielzahl an Diorganomagnesiumverbindungen, wie beispielsweise Dialkyl-, Dialkenyl-, Dialkinyl-, Diaryl-, Diheteroaryl-, Alkylalkenyl-, Alkylalkinyl-, Alkylaryl-, Alkylheteroaryl-, Alkenylalkinyl-, Alkenylaryl-, Alkenylheteroaryl-, Alkinylaryl- oder Alkinylheteroarylmagnesiumverbindungen oder deren Mischungen mit Alkalimetallorganylen bzw. Grignardverbindungen oder auch Mischungen mit Alkalimetallsalzen in nur einem definierten Lösemittel oder in definierten Lösemittelgemischen.

Ebenfall möglich ist es, mit dem erfindungsgemäßen Verfahren auch direkt alkalisalzhaltige Lösungen von diorganomagnesiumhaltigen Synthesemitteln oder alkalimetallsalzarme oder -freie Lösungen herzustellen. Die erfindungsgemäß hergestellten diorganomagnesiumhaltige Synthesemittel oder deren Mischungen mit Alkalimetallsalzen können zur Herstellung zahlreicher zum Teil hochfunktionalisierter Stoffe, wie Pharmazeutika, Naturstoffderivaten, Polymermaterialien, Agrochemikalien, Spezialitäten und Katalysatoren verwendet werden, beispielsweise in Halogen/Metall-Austauschreaktionen oder Metallierungsreaktionen, beispielsweise ortho-Metallierungsreaktionen, oder Transmetallierungsreaktionen, beispielsweise zur Herstellung von Diorganozinkverbindungen oder Organozinkhalogeniden.

Überraschenderweise wurde gefunden, dass durch Reaktion einer Verbindung der allgemeinen Formel RMgX - oder mehrerer Verbindungen der allgemeinen Formel R¹MgX, R²MgX und R³MgX - und einer Verbindung der allgemeinen Formel RX - oder mehrerer Verbindungen der allgemeinen Formel R¹X, R²X und R³X - mit Alkalimetall oder mit einem Gemisch aus Alkalimetall und Magnesium unmittelbar die gewünschten diorganomagnesiumhaltigen Synthesemittel oder deren Mischungen mit Alkalimetallsalzen entstehen. Diese Ausführungsform des erfindungsgemäßen Verfahrens wird durch die allgemeine Reaktionsformel in Abbildung 10 erläutert, ohne die Erfindung darauf einzuschränken.

Alkalimetall im Sinne der Erfindung ist das reine Alkalimetall als auch dessen Mischungen oder Legierungen mit anderen Alkalimetallen. Als Alkalimetall wird bevorzugt Lithium oder Mischungen oder Legierungen aus Lithium und einem anderen Alkalimetall, bevorzugt Natrium verwendet. Der Gehalt an Lithium in den Mischungen oder Legierungen beträgt zwischen 50 und 99,99 Gew.-%, bevorzugt zwischen 80 und 99,99 Gew.-%, weiterhin bevorzugt zwischen 90 und 99,99 Gew.-%. Es können jedoch auch andere Alkalimetalle eingesetzt werden.

Das erfindungsgemäße Verfahren wird am Beispiel nachfolgender Formel näher erläutert (Abbildung 10):

2n M + (n+m) RX + m Mg + (p-m) RMgX → n R₂Mg + n MX

R = organisches Fragment, X = Halogen; M = Lithium oder lithiumhaltige Mischung oder Legierung
RMgX = Grignardverbindung oder Mischung aus x • R¹MgX und y • R²MgX Grignardverbindungen, wobei x + y = (p - m) und x und y unabhängig voneinander gewählt sind zwischen 0 und (p - m)
RX = organisches Halogenid oder Mischung aus x • R¹X und y • R²X organischen Halogeniden, wobei x + y = (n+m) und x und y unabhängig voneinander gewählt sind zwischen 0 und (n+m)

Das erfindungsgemäße Verfahren wird allgemein wie folgt durchgeführt:

Das Alkalimetall oder ein Gemisch aus Alkalimetall und Magnesium wird/werden in einem aprotischen organischen Lösemittel oder Lösemittelgemisch suspendiert vorgelegt. Durch Zugabe einer Grignardverbindung RMgX - oder mehrerer Grignardverbindungen R¹MgX, R²MgX und R³MgX - und einer Verbindung der allgemeinen Formel RX - oder mehrerer Verbindungen der allgemeinen Formel R¹X, R²X und R³X-, voneinander getrennt oder zuvor gemischt, entsteht das gewünschte diorganomagnesiumhaltige Synthesemittel oder dessen Mischung mit Alkalimetallsalzen. Die Verbindungen der allgemeinen Formeln R¹MgX, R²MgX und R³MgX werden bevorzugt gelöst in einem aprotischen organischen Lösemittel oder Lösemittelgemisch zugegeben, weiterhin bevorzugt in dem Lösemittel oder Lösemittelgemisch, in dem das Alkalimetall oder das Gemisch aus Alkalimetall und Magnesium suspendiert sind.

Das molare Verhältnis der Gesamtmenge an Alkalimetall zu der Gesamtmenge an Verbindungen der allgemeinen Formeln RX, R¹X, R²X und R³X ist 2n / (n+m), das molare Verhältnis von Magnesium zu der Gesamtmenge an Verbindungen der allgemeinen Formeln RX, R¹X, R²X und R³X ist m / (n+m) und das molare Verhältnis der Gesamtmenge an Verbindungen der allgemeinen Formel RMgX, R¹MgX, R²MgX und R³MgX zu der Gesamtmenge an Verbindungen der allgemeinen Formeln RX, R¹X, R²X und R³X ist (p-m) / (n+m), wobei n gewählt ist zwischen n = 0,1 und n = 5, bevorzugt zwischen n = 0,8 und n = 3 und m gewählt ist zwischen m = 0 und m = 5, bevorzugt zwischen m = 0 und m = 3 und wobei (p-m) > 0 ist und p gewählt ist zwischen p = 0 und p = 10, bevorzugt zwischen p = 0 und p = 6.

In einer erfindungsgemäß bevorzugten Ausführungsform zur Herstellung von Diorganomagnesiumverbindungen und deren Mischungen mit Alkalimetallsalzen ist n gewählt zwischen n = 0,8 und n = 1,8 bevorzugt zwischen n = 0,8 und n = 1,2 und m zwischen m = 0 und m = 1, bevorzugt zwischen m = 0 und m = 0,5 und p zwischen p = 0 und p = 3, bevorzugt zwischen p = 0 und p = 1,5, wobei (p-m) > 0 ist.

In einer erfindungsgemäß bevorzugten Ausführungsform zur Herstellung von Mischungen aus Diorganomagnesiumverbindungen und Grignardverbindungen und deren Mischungen mit Alkalimetallsalzen ist p für n ≥ m bevorzugt p ≥ n und für n ≤ m ist p bevorzugt p ≥ m.

In einer erfindungsgemäß bevorzugten Ausführungsform zur Herstellung von Mischungen aus Diorganomagnesiumverbindungen und Alkalimetallorganylen und deren Mischungen mit Alkalimetallsalzen ist bevorzugt n ≥ m und p ≤ n.

In einer zur Herstellung von gleichartig substituierten diorganomagnesiumhaltigen Synthesemitteln erfindungsgemäß bevorzugten Ausführungsform wird eine Grignardverbindung RMgX und ein organisches Halogenid RX verwendet.

In einer zur Herstellung von unterschiedlich substituierten diorganomagnesiumhaltigen Synthesemitteln erfindungsgemäß bevorzugten Ausführungsform werden x • R¹MgX und y • R²MgX Grignardverbindungen und an organischem Halogenid z • R³X verwendet, wobei x und y unabhängig voneinander gewählt sind zwischen 0 und (p-m) und wobei die Summe aus x+y = (p-m) ist und wobei z gewählt ist zwischen 0 und (n+m).

In einer zur Herstellung von unterschiedlich substituierten diorganomagnesiumhaltigen Synthesemitteln weiterhin erfindungsgemäß bevorzugten Ausführungsform werden x • R¹X und y • R²X organische Halogenide und an Grignardverbindung z • R³MgX verwendet, wobei x und y unabhängig voneinander gewählt sind zwischen 0 und (n+m) und wobei die Summe aus x+y = (n+m) ist und wobei z gewählt ist zwischen 0 und (p-m).

In einer weiteren erfindungsgemäßen Ausführungsform ist das Verhältnis der molaren Dosiergeschwindigkeiten der Gesamtmenge an organischen Halogeniden RX, R¹X, R²X, R³X zur Gesamtmenge an Grignardverbindungen RMgX, R¹MgX, R²MgX, R³MgX zwischen 1 : 50 und 50 : 1, bevorzugt zwischen 1 : 20 und 20 : 1, besonders bevorzugt zwischen 1 : 10 und 10 : 1, ganz besonders bevorzugt zwischen 1 : 5 und 5 : 1.

Werden Dosiergeschwindigkeiten abweichend von den obigen Vorgaben gewählt, besteht die Möglichkeit von Nebenreaktionen wie beispielsweise Etherspaltung, insbesondere wenn das organische Halogenid deutlich schneller als die Grignardverbindung zugegeben wird.

Diorganomagnesiumhaltige Synthesemittel im Sinne der Erfindung sind Diorganomagnesiumverbindungen R₂Mg bzw. Rₓ¹R_{y}²Mg und deren Mischungen mit z Grignardverbindungen RMgX bzw. R³MgX oder z Alkalimetallorganylen RM bzw. R³M. Das molare Mischungsverhältnis mit Grignardverbindungen oder Alkalimetallorganylen wird durch z bestimmt, z liegt im Bereich zwischen 0 und 10, bevorzugt zwischen 0 und 4. Die Koeffizienten x und y ergeben in der Summe 2 und liegen unabhängig voneinander im Bereich zwischen 0 und 2. R, R¹, R² und R³ sind unabhängig voneinander gewählt und wie unten stehend definiert.

Je nach verwendetem Lösemittel oder Lösemittelgemisch werden Mischungen von diorganomagnesiumhaltigen Synthesemitteln und Alkalisalzhalogeniden erhalten, die sich im Verhältnis von Alkalisalz und magnesiumorganischer Verbindung unterscheiden.

Lithium oder lithiumhaltige Mischungen oder Legierungen werden bevorzugt in Form von Metallpulver, Metalldispersion oder Metallgranulat eingesetzt, besonders bevorzugt in Form von Metallpulver oder Metalldispersion.

Magnesium wird bevorzugt in Form von Spänen, Raspeln oder Pulvern eingesetzt.

Bevorzugt werden Grignardverbindungen RMgX und organische Halogenide RX zu einer Suspension des Alkalimetalls oder eines Gemisches aus Alkalimetall und Magnesium in einem aprotischen organischen Lösemittel oder Lösemittelgemisch dosiert.

Zur Herstellung von alkalimetallsalzhaltigen diorganomagnesiumhaltigen Synthesemitteln, beispielsweise zur Anwendung in Halogen/Metallaustauschreaktionen oder Metallierungsreaktionen, werden ausschließlich etherische Lösemittel eingesetzt, wobei cyclische Ether bevorzugt sind und wobei THF und 2-Methyl-THF besonders bevorzugt sind.

Bevorzugt wird das Verfahren zur Herstellung von diorganomagnesiumhaltigen Synthesemitteln unter Ausschluss von Luft und Feuchtigkeit durchgeführt, bevorzugt in einer Inertgasatmosphäre, besonders bevorzugt in einer Stickstoff- oder Argonatmosphäre.

Das erfindungsgemäße Verfahren kann bei Temperaturen zwischen -100°C und dem Siedepunkt der Reaktionssuspension durchgeführt werden, bevorzugt wird in einem Temperaturbereich zwischen -15°C und dem Siedepunkt der Reaktionssuspension gearbeitet, besonders bevorzugt zwischen 0°C und 60°C.

Das erfindungsgemäße diorganomagnesiumhaltige Synthesemittel entsteht neben Feststoffen, die in einer bevorzugten Ausführungsform durch Methoden des Standes der Technik abgetrennt werden. Methoden des Standes der Technik sind beispielsweise Dekantation, Filtration oder Zentrifugation. Die so erhaltenen Lösungen von diorganomagnesiumhaltigen Synthesemitteln sind je nach Lösemittel oder Lösemittelgemisch alkalimetallsalzfrei oder -haltig und können direkt in der organischen oder metallorganischen Synthesechemie eingesetzt werden.

In den Grignardverbindungen der allgemeinen Zusammensetzung RMgX, R¹MgX, R²MgX und R³MgX und den organischen Halogeniden RX, R¹X, R²X und R³X und den Diorganomagnesiumverbdindungen R₂Mg und Rₓ¹R_{y}²Mg und deren Mischungen mit Alkalimetallorganylen RM und R³M oder Grignardverbindungen RMgX und R³MgX gilt:
- R, R¹, R² und R³ können gleich oder unterschiedlich ausgewählt sein aus H, gesättigten, ungesättigten, verzweigten, unverzweigten, funktionalisierten, unfunktionalisierten, aliphatischen, cyclischen, heterozyklischen oder aromatischen organischen Fragmenten ausgewählt, R, R¹, R² und R³ können gleich oder unterschiedlich ausgewählt sein aus H, gesättigten, ungesättigten, verzweigten, unverzweigten, funktionalisierten, unfunktionalisierten, aliphatischen, cyclischen, heterozyklischen oder aromatischen organischen Fragmenten, bevorzugt Fragmenten mit 1 bis 80, besonders bevorzugt mit 1 bis 40, ganz besonders bevorzugt mit 1 bis 20 Kohlenstoffatomen, und
- R verallgemeinernd auch für R¹, R² und R³ stehen kann, und
- X ausgewählt ist aus Chlor, Brom, lod, Tosylat oder Triflat, bevorzugt aus Chlor, Brom und lod, und
- M ein Alkalimetall ist.

Insbesondere können R, R¹, R² und R³ gleich oder unterschiedlich ausgewählt sein aus Methyl-, Ethyl-, Cyclopropyl, Cyclopentyl, Cyclohexyl, Phenyl, Benzyl- und Heteroaryl-Fragmente sowie verzweigte und unverzweigte Propyl-, Butyl-, Pentyl-, Hexyl-, Heptyl-, Octyl- Fragmente.

Unter den Begriff Ether fallen im Sinne der Erfindung acyclische, cyclische, gesättigte, ungesättigte, verzweigte, unverzweigte, gleichartig substituierte und unterschiedlich substituierte Ether mit mindestens einem Sauerstoffatom, bevorzugt mit einem bis vier Sauerstoffatomen. Weiterhin bevorzugt als Ether sind Dimethylether, Diethylether, Dibutylether, Dimethoxyethan, Diethoxymethan, Polyethylenglykol, Methyl-tert-butylether, Cyclopentylmethylether, Dioxan, Tetrahydrofuran und 2-Methyltetrahydrofuran und besonders bevorzugt sind THF und 2-Methyl-THF.

Gegenstand der Erfindung ist im Einzelnen:
- ein Verfahren zur Herstellung von diorganomagnesiumhaltigen Synthesemitteln und deren Mischungen mit Alkalimetallsalzen, dadurch gekennzeichnet, dass ein Alkalimetall oder Mischungen oder Legierungen aus Alkalimetallen, eine Grignardverbindungen der allgemeinen Formel RMgX oder mehrere Grignardverbindungen der allgemeinen Formeln R¹MgX, R²MgX und R³MgX, ein organisches Halogenid der allgemeinen Formel RX oder mehrere organische Halogenide der allgemeinen Formeln R¹X, R²X und R³X miteinander umgesetzt werden;
- ein Verfahren zur Herstellung von diorganomagnesiumhaltigen Synthesemitteln und deren Mischungen mit Alkalimetallsalzen unter Verwendung von Alkalimetallen oder Mischungen oder Legierungen aus Alkalimetallen, Grignardverbindungen der allgemeinen Formel RMgX und organischen Halogeniden der allgemeinen Formel RX, wobei die diorganomagnesiumhaltigen Synthesemittel unmittelbar aus den zugegebenen Reagenzien entstehen;
- ein Verfahren zur Herstellung von diorganomagnesiumhaltigen Synthesemitteln und deren Mischungen mit Alkalimetallsalzen, wobei zusätzlich noch Magnesium verwendet wird;
- ein Verfahren zur Herstellung von diorganomagnesiumhaltigen Synthesemitteln und deren Mischungen mit Alkalimetallsalzen, wobei unter Alkalimetall Lithium oder Mischungen oder Legierungen, bestehend aus Lithium und einem anderen Alkalimetall, vorzugsweise Natrium zu verstehen sind, wobei der Anteil an Lithium in den Mischungen oder Legierungen zwischen 50 und 99,99 Gew.-%, bevorzugt zwischen 80 und 99,99 Gew.-%, weiterhin bevorzugt zwischen 90 und 99,99 Gew.-% beträgt;
- ein Verfahren zur Herstellung von diorganomagnesiumhaltigen Synthesemitteln und deren Mischungen mit Alkalimetallsalzen, wobei das Alkalimetall oder das Alkalimetall und Magnesium in einem organischen aprotischen Lösemittel oder Lösemittelgemisch suspendiert werden und eine Verbindung der allgemeinen Formel RMgX oder mehrere Verbindungen der allgemeinen Formeln R¹MgX, R²MgX und R³MgX - voneinander getrennt oder zuvor gemischt - und eine Verbindung der allgemeinen Formel RX oder mehrere Verbindungen der allgemeinen Formeln R¹X, R²X und R³X - voneinander getrennt oder zuvor gemischt - zugegeben werden;
- ein Verfahren zur Herstellung von diorganomagnesiumhaltigen Synthesemitteln und deren Mischungen mit Alkalimetallsalzen, wobei Verbindungen der allgemeinen Formel RMgX, R¹MgX, R²MgX und R³MgX gelöst in einem aprotischen organischen Lösemittel oder Lösemittelgemisch zugegeben werden, bevorzugt in dem Lösemittel oder Lösemittelgemisch, in dem das Alkalimetall oder das Alkalimetall und Magnesium suspendiert sind;
- ein Verfahren zur Herstellung von diorganomagnesiumhaltigen Synthesemitteln und deren Mischungen mit Alkalimetallsalzen, wobei das molare Verhältnis der Gesamtmenge an Alkalimetall zu der Gesamtmenge an Verbindungen der allgemeinen Formeln RX, R¹X, R²X und R³X 2n / (n+m) ist, das molare Verhältnis von Magnesium zu der Gesamtmenge an Verbindungen der allgemeinen Formeln RX, R¹X, R²X und R³X m / (n+m) ist und das molare Verhältnis der Gesamtmenge an Verbindungen der allgemeinen Formel RMgX, R¹MgX, R²MgX und R³MgX zu der Gesamtmenge an Verbindungen der allgemeinen Formeln RX, R¹X, R²X und R³X (p-m) / (n+m) ist, wobei n gewählt ist zwischen n = 0,1 und n = 5, bevorzugt zwischen n = 0,8 und n = 3 und m gewählt ist zwischen m = 0 und m = 5, bevorzugt zwischen m = 0 und m = 3 und (p-m) > 0 ist und p gewählt ist zwischen p = 0 und p = 10, bevorzugt zwischen p = 0 und p = 6;
- ein Verfahren zur Herstellung von diorganomagnesiumhaltigen Synthesemitteln und deren Mischungen mit Alkalimetallsalzen, wobei in einer zur Herstellung von Diorganomagnesiumverbindungen und deren Mischungen mit Alkalimetallsalzen bevorzugten Ausführungsform n gewählt ist zwischen n = 0,8 und n = 1,8 bevorzugt zwischen n = 0,8 und n = 1,2 und m zwischen m = 0 und m = 1, bevorzugt zwischen m = 0 und m = 0,5 und (p-m) > 0 ist und p gewählt ist aus einem Bereich zwischen p = 0 und p = 3, bevorzugt zwischen p = 0 und p = 1,5.
- ein Verfahren zur Herstellung von diorganomagnesiumhaltigen Synthesemitteln und deren Mischungen mit Alkalimetallsalzen, wobei zur Herstellung von Mischungen aus Diorganomagnesiumverbindungen und Grignardverbindungen und deren Mischungen mit Alkalimetallsalzen für n ≥ m bevorzugt p ≥ n ist und für n ≤ m bevorzugt p ≥ m ist;
- ein Verfahren zur Herstellung von diorganomagnesiumhaltigen Synthesemitteln und deren Mischungen mit Alkalimetallsalzen, wobei zur Herstellung von Mischungen aus Diorganomagnesiumverbindungen und Alkalimetallorganylen und deren Mischungen mit Alkalimetallsalzen n ≥ m und p ≤ n ist.
- ein Verfahren zur Herstellung von gleichartig substituierten diorganomagnesiumhaltigen Synthesemitteln und deren Mischungen mit Alkalimetallsalzen, wobei eine Grignardverbindung RMgX und ein organisches Halogenid RX verwendet werden;
- ein Verfahren zur Herstellung von unterschiedlich substituierten diorganomagnesiumhaltigen Synthesemitteln und deren Mischungen mit Alkalimetallsalzen, wobei zur Herstellung x • R¹MgX und y • R²MgX Grignardverbindungen und an organischem Halogenid z • R³X verwendet werden, wobei x und y unabhängig voneinander gewählt sind zwischen 0 und (p-m) und wobei die Summe aus x+y = (p-m) ist und wobei z gewählt ist zwischen 0 und (n+m) und wobei R¹ = R² ≠ R³ oder R¹ = R³ ≠ R² oder R² = R³ ≠ R¹ oder R¹ ≠ R² ≠ R³ ist;
- ein Verfahren zur Herstellung von unterschiedlich substituierten diorganomagnesiumhaltigen Synthesemitteln und deren Mischungen mit Alkalimetallsalzen, wobei zur Herstellung x • R¹X und y • R²X organische Halogenide und an Grignardverbindung z • R³MgX verwendet werden, wobei x und y unabhängig voneinander gewählt sind zwischen 0 und (n+m) und wobei die Summe aus x+y = (n+m) ist und wobei z gewählt ist zwischen 0 und (p-m) und wobei R¹ = R² ≠ R³ oder R¹ = R³ ≠ R² oder R² = R³ ≠ R¹ oder R¹ ≠ R² ≠ R³ ist;
- ein Verfahren zur Herstellung von diorganomagnesiumhaltigen Synthesemitteln und deren Mischungen mit Alkalimetallsalzen, wobei das Verhältnis der Dosiergeschwindigkeiten der Gesamtmenge an organischen Halogeniden RX, R¹X, R²X, R³X zur Gesamtmenge an Grignardverbindungen RMgX, R¹MgX, R²MgX, R³MgX gewählt ist zwischen 1 : 50 und 50 : 1, bevorzugt zwischen 1 : 20 und 20 : 1, besonders bevorzugt zwischen 1 : 10 und 10 : 1, ganz besonders bevorzugt zwischen 1 : 5 und 5: 1.
- ein Verfahren zur Herstellung von diorganomagnesiumhaltigen Synthesemitteln und deren Mischungen mit Alkalimetallsalzen, wobei das Lithium oder die lithiumhaltigen Legierungen oder Mischungen in Form von Metallpulver, Metalldispersion oder Metallgranulat verwendet werden, bevorzugt in Form von Metallpulver oder Metalldispersion;
- ein Verfahren zur Herstellung von diorganomagnesiumhaltigen Synthesemitteln und deren Mischungen mit Alkalimetallsalzen, wobei das Magnesium bevorzugt in Form von Spänen, Raspeln oder Pulvern verwendet wird.
- ein Verfahren zur Herstellung von diorganomagnesiumhaltigen Synthesemitteln und deren Mischungen mit Alkalimetallsalzen, wobei die Grignardverbindungen RMgX oder R¹MgX, R²MgX und/oder R³MgX und die organische Halogenide RX oder R¹X, R²X und/oder R³X zu einer Suspension des Alkalimetalls oder des Alkalimetalls und Magnesium dosiert werden;
- ein Verfahren zur Herstellung von diorganomagnesiumhaltigen Synthesemitteln und deren Mischungen mit Alkalimetallsalzen, wobei zur Herstellung von alkalimetallsalzhaltigen diorganomagnesiumhaltigen Synthesemitteln, beispielsweise zur Anwendung in Halogen/Metallaustauschreaktionen oder Metallierungsreaktionen, alleinig etherische Lösemittel eingesetzt werden, wobei bevorzugt cyclische Ether und besonders bevorzugt THF und 2-Methyl-THF eingesetzt werden;
- ein Verfahren zur Herstellung diorganomagnesiumhaltigen Synthesemitteln und deren Mischungen mit Alkalimetallsalzen, wobei die Verfahren unter Ausschluss von Luft und Feuchtigkeit, bevorzugt in einer Inertgasatmosphäre, besonders bevorzugt in einer Stickstoff- oder Argonatmosphäre, durchgeführt werden;
- ein Verfahren zur Herstellung von diorganomagnesiumhaltigen Synthesemitteln und deren Mischungen mit Alkalimetallsalzen, wobei das erfindungsgemäße Verfahren bei Temperaturen zwischen -100°C und dem Siedepunkt der Reaktionssuspension durchgeführt werden, bevorzugt bei Temperaturen zwischen -15°C und dem Siedepunkt der Reaktionssuspension, besonders bevorzugt zwischen 0°C und 60°C;
- ein Verfahren zur Herstellung von diorganomagnesiumhaltigen Synthesemitteln und deren Mischungen mit Alkalimetallsalzen, wobei die entsprechenden diorganomagnesiumhaltigen Synthesemittel und deren Mischungen mit Alkalimetallsalzen von ausgefallenen Feststoffen durch Methoden des Standes der Technik, bevorzugt Dekantation, Filtration oder Zentrifugation, abgetrennt werden;
- ein Verfahren zur Herstellung von diorganomagnesiumhaltigen Synthesemitteln und deren Mischungen mit Alkalimetallsalzen, wobei R, R¹, R² und R³ für alle Fälle unabhängig voneinander aus H, gesättigten, ungesättigten, verzweigten, unverzweigten, funktionalisierten, unfunktionalisierten, aliphatischen, cyclischen, heterozyklischen oder aromatischen organischen Fragmenten ausgewählt, wobei gesättigte, ungesättigte, verzweigte, unverzweigte, funktionalisierte, unfunktionalisierte, aliphatische, cyclische, heterozyklische oder aromatische organische Fragmente mit 1 bis 80 Kohlenstoffatomen bevorzugt sind, wobei insbesondere gesättigte, ungesättigte, verzweigte, unverzweigte, funktionalisierte, unfunktionalisierte, aliphatische, cyclische, heterozyklische oder aromatische organische Fragmente mit 1 bis 40 Kohlenstoffatomen bevorzugt sind, wobei gesättigte, ungesättigte, verzweigte, unverzweigte, funktionalisierte, unfunktionalisierte, aliphatische, cyclische, heterozyklische oder aromatische organische Fragmente mit 1 bis 20 Kohlenstoffatomen besonders bevorzugt sind und wobei verzweigte und unverzweigte Methyl-, Ethyl-, Propyl-, Butyl-, Pentyl-, Hexyl-, Heptyl-, Octyl-, Cyclopropyl, Cyclopentyl, Cyclohexyl, Phenyl, Benzyl und Heteroaryl-Fragmente besonders bevorzugt sind, und X gewählt ist aus Chlor, Brom, lod, Tosylat oder Triflat, bevorzugt aus Chlor, Brom und lod;
- ein Verfahren zur Herstellung von diorganomagnesiumhaltigen Synthesemitteln und deren Mischungen mit Alkalimetallsalzen, wobei aprotische, organische Lösemittel verwendet werden;
- ein Verfahren zur Herstellung von diorganomagnesiumhaltigen Synthesemitteln und deren Mischungen mit Alkalimetallsalzen, wobei, als Ether cyclische, gesättigte, ungesättigte, verzweigte, unverzweigte, gleichartig substituierte und unterschiedlich substituierte Ether mit mindestens einem Sauerstoffatom eingesetzt werden, bevorzugt mit einem bis vier Sauerstoffatomen, besonders bevorzugt Dimethylether, Diethylether, Dibutylether, Dimethoxyethan, Diethoxymethan, Methyl-tert-butylether, Polyethylenglykol, Cyclopentylmethylether, Dioxan, Tetrahydrofuran und 2-Methyltetrahydrofuran;
- ein Verfahren zur Herstellung von gleichartig oder unterschiedlich substituierten Dialkyl-, Dialkenyl-, Dialkinyl-, Diaryl-, Diheteroaryl-, Alkylalkenyl-, Alkylalkinyl-, Alkylaryl-, Alkylheteroaryl-, Alkenylalkinyl-, Alkenylaryl-, Alkenylheteroaryl-, Alkinylaryl- oder Alkinylheteroarylmagnesiumverbindungen oder deren Mischungen mit Alkalisalzen, Grignardverbindungen RMgX oder lithiumorganischen Verbindungen RLi;
- ein Verfahren zur Herstellung von gleichartig oder unterschiedlich substituierten Din-Alkyl-, Di-sec-Alkyl-, Di-iso-Alkyl-, Di-tert-Alkyl-, Di-cycloalkyl-, Di-aryl- und Diheteroaryl-magnesiumverbindungen oder deren Mischungen mit Alkalisalzen, Grignardverbindungen RMgX oder lithiumorganischen Verbindungen RLi;
- ein Verfahren zur Herstellung von Dimethylmagnesium, Diethylmagnesium, Di-isopropylmagnesium, Di-n-propylmagnesium, Di-n-Butylmagnesium, Di-sec-butylmagnesium, Di-iso-butylmagnesium, Di-tert-butylmagnesium, Di-cyclopropylmagnesium, Di-cyclo-pentylmagnesium, Di-cyclo-hexylmagnesium, Di-n-pentylmagnesium, Di-n-hexylmagnesium, Diphenylmagnesium, Dibenzylmagnesium, n-Butyl-n-ocytlmagnesium, n-Butyl-ethylmagnesium, s-Butyl-ethylmagnesium oder s-Butyl-n-Butylmagnesium oder deren Mischungen mit Alkalisalzen, Grignardverbindungen RMgX oder lithiumorganischen Verbindungen RLi;
- die Verwendung der erfindungsgemäß hergestellten diorganomagnesiumhaltigen Synthesemittel und deren Mischungen mit Alkalisalzen in der Synthesechemie;
- die Verwendung der erfindungsgemäß hergestellten diorganomagnesiumhaltigen Synthesemittel und deren Mischungen mit Alkalisalzen in der organischen Chemie und metallorganischen Chemie;
- die Verwendung der erfindungsgemäß hergestellten diorganomagnesiumhaltigen Synthesemittel und deren Mischungen mit Alkalisalzen in Halogen/Metall-Austauschreaktionen;
- die Verwendung der erfindungsgemäß hergestellten diorganomagnesiumhaltigen Synthesemittel und deren Mischungen mit Alkalisalzen in Metallierungsreaktionen, bevorzugt in ortho-Metallierungsreaktionen;
- die Verwendung der erfindungsgemäß hergestellten diorganomagnesiumhaltigen Synthesemittel und deren Mischungen mit Alkalisalzen in Transmetallierungsreaktionen;
- die Verwendung der erfindungsgemäß hergestellten diorganomagnesiumhaltigen Synthesemittel und deren Mischungen mit Alkalisalzen zur Herstellung von Organozinkhalogeniden oder Diorganozinkverbindungen;
- die Verwendung der erfindungsgemäß hergestellten diorganomagnesiumhaltigen Synthesemittel und deren Mischungen mit Alkalisalzen zur Herstellung von Magnesiumalkoholaten und Magnesiumhalogeniden;
- eine Diorganomagnesiumverbindung Rₓ¹R_{y}²Mg als Lösung in einem etherhaltigen Lösemittel, wobei sie im Gemisch mit Lithiumhalogeniden und/oder Grignardverbidnungen RMgX und/oder Alkalimetallorganylen RM vorliegt und das Molverhältnis von Diorganomagnesiumverbindungen und Lithiumhalogenid zwischen 1 : : 0,1 bis 1:2 beträgt und das molare Mischungsverhältnis von Diorganomagnesiumverbindung und Grignardverbindung bzw. Alkalimetallorganyl zwischen 1 : 0,15 und 1 : 4 beträgt und die Summe x + y = 2 ist und x und y unabhängig voneinander aus dem Bereich zwischen 0 und 2 gewählt sind;
- eine Lösung von Diorganomagnesiumverbindungen Rₓ¹R_{y}²Mg und Lithiumhalogeniden, ausgewählt aus der Gruppe Lithiumchlorid, Lithiumbromid und Lithiumiodid, in einem tetrahydrofuran- oder 2-methyltetrahydrofuranhaltigen Lösemittel, und deren Mischungen mit Grignardverbindungen RMgX oder Alkalimetallorganylen RM, wobei R, R¹ und R² unabhängig voneinander aus sekundären Alkylgruppen gewählt ist, bevorzugt sec-butyl, iso-propyl, cyclopropyl, cyclopentyl, cyclohexyl und das Molverhältnis von Rₓ¹R_{y}²Mg und dem Lithiumhalogenid im Bereich zwischen 1 : 0,1 und 1 : 2 liegt und das molare Mischungsverhältnis von Diorganomagnesiumverbindung und Grignardverbindung bzw. Alkalimetallorganyl zwischen 1 : 0,15 und 1 : 4 beträgt und die Summe x + y = 2 ist und x und y unabhängig voneinander aus dem Bereich zwischen 0 und 2 gewählt sind;
- eine Lösung von Diorganomagnesiumverbindungen Rₓ¹R_{y}²Mg und Lithiumhalogeniden, ausgewählt aus der Gruppe Lithiumchlorid, Lithiumbromid und Lithiumiodid, in einem tetrahydrofuran- oder 2-methyltetrahydrofuranhaltigen Lösemittel, und deren Mischungen mit Grignardverbindungen RMgX oder Alkalimetallorganylen RM, wobei R, R¹ und R² unabhängig voneinander gewählt aus methyl, ethyl, iso-propyl, n-propyl, n-butyl, iso-butyl, sec-butyl, tert-butyl, n-pentyl, n-hexyl, n-heptyl, n-octyl, cyclopropyl, cyclopentyl, cyclohexyl, phenyl, benzyl und das Molverhältnis von Rₓ¹R_{y}²Mg und dem Lithiumhalogenid im Bereich zwischen 1 : 0,1 und 1 : 2 liegt und das molare Mischungsverhältnis von Diorganomagnesiumverbindung und Grignardverbindung bzw. Alkalimetallorganyl zwischen 1 : 0,15 und 1 : 4 beträgt und die Summe x + y = 2 ist und x und y unabhängig voneinander aus dem Bereich zwischen 0 und 2 gewählt sind.
- eine Lösung von Diorganomagnesiumverbindungen Rₓ¹R_{y}²Mg und Lithiumhalogeniden, ausgewählt aus der Gruppe Lithiumchlorid, Lithiumbromid und Lithiumiodid, in Tetrahydrofuran oder 2-Methyltetrahydrofuran und deren Mischungen mit Grignardverbindungen RMgX oder Alkalimetallorganylen RM, wobei R, R¹ und R² unabhängig voneinander gewählt aus methyl, ethyl, iso-propyl, n-propyl, n-butyl, iso-butyl, sec-butyl, tert-butyl, n-pentyl, n-hexyl, n-heptyl, n-octyl, cyclopropyl, cyclopentyl, cyclohexyl, phenyl, benzyl und das Molverhältnis von Rₓ¹R_{y}²Mg und dem Lithiumhalogenid im Bereich zwischen 1 : 0,1 und 1 : 2 liegt und das molare Mischungsverhältnis von Diorganomagnesiumverbindung und Grignardverbindung bzw. Alkalimetallorganyl zwischen 1 : 0,15 und 1 : 4 beträgt und die Summe x + y = 2 ist und x und y unabhängig voneinander aus dem Bereich zwischen 0 und 2 gewählt sind.
- eine Lösung von Diorganomagnesiumverbindungen Rₓ¹R_{y}²Mg und Lithiumhalogeniden, ausgewählt aus der Gruppe Lithiumchlorid, Lithiumbromid und Lithiumiodid, in Lösemittelgemischen aus Kohlenwasserstoffen und Ethern und deren Mischungen mit Grignardverbindungen RMgX oder Alkalimetallorganylen RM, wobei R, R¹ und R² unabhängig voneinander gewählt sind aus methyl, ethyl, iso-propyl, n-propyl, n-butyl, iso-butyl, sec-butyl, tert-butyl, n-pentyl, n-hexyl, n-heptyl, n-octyl, cyclopropyl, cyclopentyl, cyclohexyl, phenyl, benzyl und das Molverhältnis von Rₓ¹R_{y}²Mg und dem Lithiumhalogenid im Bereich zwischen 1 : 0,05 und 1 : 2 liegt und das molare Mischungsverhältnis von Diorganomagnesiumverbindung und Grignardverbindung bzw. Alkalimetallorganyl zwischen 1 : 0,05 und 1 : 4 beträgt und die Summe x + y = 2 ist und x und y unabhängig voneinander aus dem Bereich zwischen 0 und 2 gewählt sind und wobei das Molverhältnis von Ether zu Diorganomagnesiumverbindung zwischen 0,02 : 1 und 50 : 1 beträgt;
- eine Lösung von Diorganomagnesiumverbindungen Rₓ¹R_{y}²Mg und Lithiumhalogeniden, ausgewählt aus der Gruppe Lithiumchlorid, Lithiumbromid und Lithiumiodid, in Lösungsmittelgemischen aus Dimethylether, Diethylether, Dibutylether, Methyl-tert-Butylether, Cyclopentylmethylether, Tetrahydrofuran oder 2-Methyltetrahydrofuran und Toluol, Cumol, Xylole, Pentan, Hexan, Heptan, Octan, Cyclohexan oder Methylcyclohexan und deren Mischungen mit Grignardverbindungen RMgX oder Alkalimetallorganylen RM, wobei R, R¹ und R² unabhängig voneinander gewählt sind aus methyl, ethyl, iso-propyl, n-propyl, n-butyl, iso-butyl, sec-butyl, tert-butyl, n-pentyl, n-hexyl, n-heptyl, n-octyl, cyclopropyl, cyclopentyl, cyclohexyl, phenyl, benzyl und das Molverhältnis von Rₓ¹R_{y}²Mg und dem Lithiumhalogenid im Bereich zwischen 1 : 0,05 und 1 : 2 liegt und das molare Mischungsverhältnis von Diorganomagnesiumverbindung und Grignardverbindung bzw. Alkalimetallorganyl zwischen 1 : 0,05 und 1 : 4 beträgt und die Summe x + y = 2 ist und x und y unabhängig voneinander aus dem Bereich zwischen 0 und 2 gewählt sind und wobei das Molverhältnis von Ether zu Diorganomagnesiumverbindung zwischen 0,02 : 1 und 50 : 1 beträgt;

Die Erfindung wird anhand der folgenden Beispiele erläutert, ohne sie darauf einzu-schränken.

Zur Verdeutlichung der Effizienz des erfindungsgemäßen Verfahrens wird die Herstellung von Di-sec-butylmagnesium und dessen Mischungen mit sec-BuLi bzw. sec-BuMgCl und LiCl gewählt. Eine Herstellung dieser Verbindung gemäß dem Stand der Technik, beispielsweise durch oxidative Addition von zwei Äquivalenten sec-Butylchlorid an Magnesium, führt wie beschrieben zu β-H-Eliminierung und verschiedenen Nebenprodukten. Zudem sind hohe Verfahrenstemperaturen und lange Reaktionszeiten nötig. Versuche zur Herstellung von (sec-Bu)₂Mg durch Transmetallierung mit sec-BuLi führen zu Lösemittelgemischen. Will man direkt lithiumchloridhaltige Lösungen durch Umsetzung von sec-BuMgCl mit sec-BuLi erhalten, ist das Arbeiten mit nur bedingt stabilem sec-BuLi-Konzentrat nötig, das außerdem noch pyrophor ist. Wird die Synthese von sec-Bu₂Mg / LiCl-Mischungen mit sec-BuMgCl und sec-BuLi-Konzentrat in THF beispielsweise bei 0°C durchgeführt, wird zudem noch THF-Spaltung beobachtet, so dass die Produktlösung verunreinigt ist.

Alle Versuche werden in einer Argon-Atmossphäre unter Verwendung von Schlenk-Techniken durchgeführt. Es wurden technische Rohstoffe eingesetzt. An sec-BuMgCl kommen verschiedene Chargen als ca. 25%ige Lösungen in THF zum Einsatz. Der genaue Gehalt und die Zusammensetzung der Chargen werden nassanalytisch bestimmt. An Lithium wurde Lithiummetall mit unterschiedlichem Natriumanteil verwendet. Der Gehalt an Natrium ist in Fig. 1, Tabelle 1 angegeben.

Die Versuchsparameter, Analysenergebnisse und Auswertungen der Beispiele zur erfindungsgemäßen Herstellung von magnesiumorganischen Verbindungen sind in Fig. 1 und 2, Tabellen 1 und 2 zusammengefasst. In den Beispielen ist R = sec-Butyl. Soweit angegeben, wurden während der Reaktion Proben entnommen und nassanalytisch untersucht. Dies wurde bei der Bestimmung der Ausbeute nicht berücksichtigt, so dass im Falle von Probenahmen die in den Tabellen angegebenen Ausbeuten je nach Anzahl der Proben niedriger ausfallen.

Der Gehalt an Magnesium wurde komplexometrisch, der Gehalt an Chlorid argentometrisch und der Gehalt an Totalbase acidimetrisch nach Hydrolyse bestimmt. Die Aktivbase wurde nach Watson-Eastham mit 2,2'-Bichinolin als Indikator bestimmt.

### Beispiele 1 bis 13: Diorganomagnesiumhaltige Synthesemittel über Lithium, sec-Butylchlorid und sec-Butylmagnesiumchlorid teilweise mit Magnesium, nach Abbildung 10:

### Allgemeine Vorgehensweise erläutert anhand von Beispiel 1:

Zu einer Suspension aus 3,00 g (432 mmol) Lithium-Metall und 1,73 g (71 mmol) grobem Magnesiumpulver in 149 g THF werden innerhalb von 125 Minuten bei einer Reaktionstemperatur von 25°C 24,0 g (259 mmol) sec-Butylchlorid und 81,0 g (166 mmol) sec-Butylmagnesiumchlorid (als ca. 25%ige Lösung in THF) zugegeben. Nach einer Nachreaktionszeit von 60 Minuten bei 25°C wird die erhaltene Suspension filtriert, der Rückstand mit THF gewaschen und anschließend am Vakuum getrocknet.

### Ausbeute Urlösung: 221,4 g einer braunen Lösung; Waschlösung: 86,44 g.

Die Beispiele 2 bis 13 wurden analog zu Beispiel 1 gemäß den Versuchsparametern in Tabelle 1, durchgeführt. In den Beispielen 3 bis 13 wurde kein Magnesiummetall eingesetzt. Die Versuchsparameter und Ergebnisse sind in Tabelle 2, zusammengefasst.

Durch GC/MS-Untersuchungen und ¹H-NMR-Messungen wurde die Identität und Reinheit der isolierten Produkte bestätigt.

**Tabelle 1: Versuchsbedingungen in Synthesen von diorganomagnesiumhaltigen Synthesemitteln: Beispiele 1 bis 13**

| **Beispiel** | **Einwaagen** | | | | | | **Zugabegeschwindigkeiten** | | | |
|---|---|---|---|---|---|---|---|---|---|---|
| | **sec-BuMgCl¹** | **Li** | **Mg** | **see-BuCl** | **Lösungsmittel** | **Temp.** | **sec-BuCl** | **sec-BuMgCl** | **Nachreaktionszeit** | **Na-Gehalt** |
| | **[mmol]** | **[mmol]** | **[mmol]** | **[mmol]** | **[g]** | **[°C]** | **[mmol/h]** | **[mmol/h]** | **[min]** | **[Gew.%]** |
| 1 | 166 | 432 | 71 | 259 | 149² | 25 | 156 | 83 | 60 | 3,3 |
| 2 | 114 | 476 | 144 | 357 | 189² | 25 | 214 | 57 | 90 | 0,8 |
| 3 | 247 | 1130 | - | 494 | 115² | 35 | 228 | 239 | 120 | 3,8 |
| 4 | 119 | 249 | - | 125 | 77² | 25 | 63 | 60 | 60 | 3,8 |
| 5 | 186 | 389 | - | 195 | 115² | 25 | 117 | 93 | 60 | 3,8 |
| 6 | 390 | 777 | - | 388 | 240² | 30 | 240 | 261 | 210 | 5,2 |
| 7 | 390 | 775 | - | 390 | 247² | 30 | 239 | 261 | 45 | 3,3 |
| 8 | 445 | 979 | - | 451 | 231² | 30 | 288 | 284 | 100 | 3,7 |
| 9 | 440 | 933 | - | 443 | 246² | 30 | 295 | 352 | >80 | 3,7 |
| 10 | 2226 | 5090 | - | 2250 | 1138² | 20-30 | 1055 | 1113 | 110 | 3,7 |
| 11 | 328 | 705 | - | 334 | 169² | 10 | 143 | 165 | 150 | 3,6 |
| 12 | 394 | 830 | - | 396 | 240³ | 20 | 240 | 250 | 100 | 1,1 |
| 13 | 502 | 2170 | | 998 | 350³ | 25 | 230 | 230 | 150 | 2,5 |
| ¹ [OH] = 2,05 mmol/g, [Mg²⁺] = 2,15 mmol/g, [Cl⁻] = 2,26 mmol/g; Aktivbase = 2,05 mmol/g; ² THF, ³ Toluol | | | | | | | | | | |

**Tabelle 2: Analysenwerte und Auswertung der Produktlösungen in Synthesen von diorganomagnesiumhaltigen Synthesemitteln: Beispiele 1 bis 13**

| | **Analysenwerte** | | | | **Zusammensetzung** | | | | | | **Ausbeute (auf OH)** |
|---|---|---|---|---|---|---|---|---|---|---|---|
| | **OH** | **Cl** | **Mg** | **Li** | **LiCl** | **RMgX ³** | **R₂Mg ⁴** | **RLi ⁵** | | **Aktivbase** | |
| **No.** | **[mmol/g]** | | | | **[mmol/g]** | | | | | **[mmol/g]** | **[%]** |
| 1 | 1,55 | 1,06 | 0,82 | 0,99 | 0,99¹ | 0,07 | 0,75 | - | R₂Mg x 0,09 RMgX x 1,32 LiCl | 1,56 | 84,8 ⁶ |
| 2 | 1,57 | 1,00 | 0,80 | 0,98 | 0,98¹ | 0,02 | 0,78 | - | R₂Mg x 0,03 RMgX x 1,26 LiCl | n.a. | 82,2 ⁶ |
| 3 | 2,78 | 1,04 | 0,68 | 2,00 | 1,04 | - | 0,89 | 0,96 | R₂Mg x 1,08 RLi x 1,17 LiCl | 2,74 | 93,0 ^{6,7} |
| 4 | 1,68 | 1,27 | 0,88 | 1,15 | 1,15 | 0,12 | 0,72 | - | R₂Mg x 0,16 RMgX x 1,51 LiCl | 1,53 | 99,7 ⁷ |
| 5 | 1,69 | 1,22 | 0,93 | 1,10 | 1,10 | 0,12 | 0,81 | - | R₂Mg x 0,15 RMgX x 1,36 LiCl | 1,67 | 96,6 ⁸ |
| 6 | 1,40 | 1,20 | 0,80 | 1,08 | 1,08 | 0,12 | 0,68 | - | R₂Mg x 0,18 RMgX x 1,59 LiCl | 1,32 | 93,6 ⁸ |
| 7 | 1,59 | 1,25 | 0,85 | 1,14 | 1,14 | 0,11 | 0,74 | - | R₂Mg x 0,15 RMgX x 1,54 LiCl | n.a. | 98,8 ⁷ |
| 8 | 1,96 | 1,01 | 0,93 | 1,00 | 1,00 | 0,01 | 0,97 | - | R₂Mg x 0,01 RMgX x 1,03 LiCl | n.a. | 98,9 ⁷ |
| 9 | 1,82 | 1,11 | 0,90 | 1,12 | 1.11 ² | - | 0,90 | 0,01 | R₂Mg x 0,01 RLi x 1,23 LiCl | 1,78 | 99.4 ⁷ |
| 10 | 1,91 | 1,04 | 0,92 | 1,12 | 1,04 ² | - | 0,92 | 0,08 | R₂Mg x 0,09 RLi x 1,13 LiCl | 1,88 | 97.9 ⁷ |
| 11 | 1,88 | 1,05 | 0,92 | 1,11 | 1,05 ² | - | 0,92 | 0,06 | R₂Mg x 0,07 RLi x 1,14 LiCl | n.a. | 93,4 ⁸ |
| 12 | 1,51 | 0,51 | 0,74 | 0,54 | 0,51 ² | - | 0,74 | 0,03 | R₂Mg x 0,04 RLi x 0,69 LiCl | 1,47 | 98,6 ⁷ |
| 13 | 2,48 | 0,78 | 0,81 | 1,62 | 0,78 ² | - | 0,81 | 0,84 | R₂Mg x 1,04 RLi x 0,96 LiCl | 2,41 | 97,8 ⁷ |

| | | | | | | | | | | | |
|---|---|---|---|---|---|---|---|---|---|---|---|
| ¹ als [Li]; ² als [Cl]; ³berechnet: [Cl]-[Li]; ⁴ berechnet: [Mg]_{Ges}-[Mg]_{RMgx}; ⁵berechnet: [Li]-[Cl]; ⁶ Probenahme nicht berucksichtigt; ⁷Waschlösung berücksichtigt; ⁸ Waschlösung nicht berücksichtigt | | | | | | | | | | | |

## Patentansprüche

1. Verfahren zur Herstellung von diorganomagnesiumhaltigen Synthesemitteln und deren Mischungen mit Alkalimetallsalzen, **dadurch gekennzeichnet, dass** ein Alkalimetall oder Mischungen oder Legierungen aus Alkalimetallen, eine Grignardverbindungen der allgemeinen Formel RMgX oder mehrere Grignardverbindungen der allgemeinen Formeln R¹MgX, R²MgX und R³MgX, ein organisches Halogenid der allgemeinen Formel RX oder mehrere organische Halogenide der allgemeinen Formeln R¹X, R²X und R³X miteinander umgesetzt werden, wobei gilt:
- R, R¹, R² und R³ können gleich oder unterschiedlich ausgewählt sein aus H, gesättigten, ungesättigten, verzweigten, unverzweigten, funktionalisierten, unfunktionalisierten, aliphatischen, cyclischen, heterozyklischen oder aromatischen organischen Fragmenten, bevorzugt Fragmenten mit 1 bis 80, besonders bevorzugt mit 1 bis 40, ganz besonders bevorzugt mit 1 bis 20 Kohlenstoffatomen, und
- X ausgewählt ist aus Chlor, Brom, Iod, Tosylat oder Triflat, bevorzugt aus Chlor, Brom und Iod,
wobei die Umsetzung ausschließlich in Ethern stattfindet und zur Herstellung eine oder mehrere verschiedene Grignardverbindungen RMgX oder R¹MgX, R²MgX und/oder R³MgX in Ethern verwendet werden sowie das Alkalimetall oder das Alkalimetall und Magnesium in Ethern suspendiert vorgelegt werden.

2. Verfahren nach Anspruch 1, **dadurch gekennzeichnet, dass** R, R¹, R² und R³ können gleich oder unterschiedlich ausgewählt sein aus Methyl-, Ethyl-, Cyclopropyl, Cyclopentyl, Cyclohexyl, Phenyl, Benzyl- und Heteroaryl-Fragmente sowie verzweigte und unverzweigte Propyl-, Butyl-, Pentyl-, Hexyl-, Heptyl-, Octyl-Fragmente.

3. Verfahren nach Anspruch 1 oder 2, **dadurch gekennzeichnet, dass** zusätzlich Magnesium zugegeben wird.

4. Verfahren nach mindestens einem der Ansprüche 1 bis 3, **dadurch gekennzeichnet, dass** das Alkalimetall Lithium oder Mischungen oder Legierungen, bestehend aus Lithium und einem anderen Alkalimetall, vorzugsweise Natrium, ist, wobei der Anteil an Lithium in den Mischungen oder Legierungen zwischen 50 und 99,99 Gew.-%, bevorzugt zwischen 80 und 99,99 Gew.-%, weiterhin bevorzugt zwischen 90 und 99,99 Gew.-% beträgt.

5. Verfahren nach mindestens einem der Ansprüche 1 bis 4, **dadurch gekennzeichnet, dass** das molare Verhältnis der Gesamtmenge an Alkalimetall zu der Gesamtmenge an Verbindungen der allgemeinen Formeln RX, R¹X, R²X und R³X 2n / (n+m) ist, das molare Verhältnis von Magnesium zu der Gesamtmenge an Verbindungen der allgemeinen Formeln RX, R¹X, R²X und R³X m / (n+m) ist, und das molare Verhältnis der Gesamtmenge an Verbindungen der allgemeinen Formel RMgX, R¹MgX, R²MgX und R³MgX zu der Gesamtmenge an Verbindungen der allgemeinen Formeln RX, R¹X, R²X und R³X (p-m) / (n+m) ist, wobei n gewählt ist zwischen n = 0,1 und n = 5, bevorzugt zwischen n = 0,8 und n = 3, und m gewählt ist zwischen m = 0 und m = 5, bevorzugt zwischen m = 0 und m = 3, und (p-m) > 0 ist und p gewählt ist zwischen p = 0 und p = 10, bevorzugt zwischen p = 0 und p = 6.

6. Verfahren nach mindestens einem der Ansprüche 1 bis 5, **dadurch gekennzeichnet, dass** n gewählt ist zwischen n = 0,8 und n = 1,8 bevorzugt zwischen n = 0,8 und n = 1,2 und m zwischen m = 0 und m = 1, bevorzugt zwischen m = 0 und m = 0,5 und (p-m) > 0 ist und p gewählt ist zwischen p = 0 und p = 3, bevorzugt zwischen p = 0 und p = 1,5.

7. Verfahren nach mindestens einem der Ansprüche 1 bis 5, **dadurch gekennzeichnet, dass** für n ≥ m bevorzugt p ≥ n ist und für n ≤ m bevorzugt p ≥ m ist.

8. Verfahren nach mindestens einem der Ansprüche 1 bis 5, **dadurch gekennzeichnet, dass** n ≥ m und p ≤ n ist.

9. Verfahren nach mindestens einem der Ansprüche 1 bis 8, **dadurch gekennzeichnet, dass** zur Herstellung von gleichartig substituierten diorganomagnesiumhaltigen Synthesemitteln und deren Mischungen mit Alkalimetallsalzen eine Grignardverbindung RMgX und ein organisches Halogenid RX verwendet werden.

10. Verfahren nach mindestens einem der Ansprüche 1 bis 8, **dadurch gekennzeichnet, dass** zur Herstellung von unterschiedlich substituierten diorganomagnesiumhaltigen Synthesemitteln und deren Mischungen mit Alkalimetallsalzen x • R¹MgX und y • R²MgX Grignardverbindungen und an organischem Halogenid z • R³X verwendet werden, wobei x und y unabhängig voneinander gewählt sind zwischen 0 und (p-m) und wobei die Summe aus x+y = (p-m) ist und wobei z gewählt ist zwischen 0 und (n+m) und wobei R¹ = R² ≠ R³ oder R¹ = R³ ≠ R² oder R² = R³ ≠ R¹ oder R¹ ≠ R² ≠ R³ ist.

11. Verfahren nach mindestens einem der Ansprüche 1 bis 8, **dadurch gekennzeichnet, dass** zur Herstellung von unterschiedlich substituierten diorganomagnesiumhaltigen Synthesemitteln und deren Mischungen mit Alkalimetallsalzen x • R¹X und y • R²X organische Halogenide und an Grignardverbindung z • R³MgX verwendet werden, wobei x und y unabhängig voneinander gewählt sind zwischen 0 und (n+m) und wobei die Summe aus x+y = (n+m) ist und wobei z gewählt ist zwischen 0 und (p-m) und wobei R¹ = R² ≠ R³ oder R¹ = R³ ≠ R² oder R² = R³ ≠ R¹ oder R¹ ≠ R² ≠ R³ ist.

12. Verfahren nach mindestens einem der Ansprüche 1 bis 11, **dadurch gekennzeichnet, dass** das Verhältnis der Dosiergeschwindigkeiten der Gesamtmenge an organischen Halogeniden RX, R¹X, R²X, R³X zur Gesamtmenge an Grignardverbindungen RMgX, R¹MgX, R²MgX, R³MgX gewählt ist zwischen 1 : 50 und 50 : 1, bevorzugt zwischen 1 : 20 und 20 : 1, besonders bevorzugt zwischen 1 : 10 und 10: 1, ganz besonders bevorzugt zwischen 1 : 5 und 5:1.

13. Verfahren nach mindestens einem der Ansprüche 1 bis 12, **dadurch gekennzeichnet, dass** das Lithium oder die lithiumhaltigen Legierungen oder Mischungen in Form von Metallpulver, Metalldispersion oder Metallgranulat verwendet werden, bevorzugt in Form von Metallpulver oder Metalldispersion.

14. Verfahren nach mindestens einem der Ansprüche 1 bis 13, **dadurch gekennzeichnet, dass** das Magnesium bevorzugt in Form von Spänen, Raspeln oder Pulvern verwendet wird.

15. Verfahren nach mindestens einem der Ansprüche 1 bis 14, **dadurch gekennzeichnet, dass** die Grignardverbindungen RMgX oder R¹MgX, R²MgX und/oder R³MgX und die organischen Halogenide RX oder R¹X, R²X und/oder R³X zu einer Suspension des Alkalimetalls oder des Alkalimetalls und Magnesium dosiert werden.

16. Verfahren nach mindestens einem der Ansprüche 1 bis 15, **dadurch gekennzeichnet, dass** als Ether Dimethylether, Diethylether, Dibutylether, Methyltert-Butylether, Cyclopentylmethylether, Tetrahydrofuran oder 2-Methyltetrahydrofuran, bevorzugt THF und/oder 2-Methyl-THF, eingesetzt werden.

17. Verfahren nach mindestens einem der Ansprüche 1 bis 16, **dadurch gekennzeichnet, dass** es bei Temperaturen zwischen -100°C und dem Siedepunkt der Reaktionssuspension, bevorzugt bei Temperaturen zwischen -15°C und dem Siedepunkt der Reaktionssuspension, besonders bevorzugt zwischen 0°C und 60°C durchgeführt wird.

18. Synthesemittel, das eine Diorganomagnesiumverbindung_Rₓ¹R_{y}²Mg als Lösung in einem etherhaltigen Lösemittel enthält, herstellbar nach mindestens einem der Ansprüche 1 bis 17, **dadurch gekennzeichnet, dass** die Diorganomagnesiumverbindung im Gemisch mit Lithiumhalogeniden und/oder Grignardverbindungen RMgX und/oder Alkalimetallorganylen RM vorliegt und das Molverhältnis von Diorganomagnesiumverbindungen und Lithiumhalogenid zwischen 1 : 0,1 bis 1 : 2 beträgt und das molare Mischungsverhältnis von Diorganomagnesiumverbindung und Grignardverbindung bzw. Alkalimetallorganyl zwischen 1 : 0,15 und 1 : 4 beträgt und die Summe x + y = 2 ist und x und y unabhängig voneinander aus dem Bereich zwischen 0 und 2 gewählt sind, wobei das Lösemittel Tetrahydrofuran und/oder 2-Methyltetrahydrofuran enthält oder aus Tetrahydrofuran oder 2-Methyltetrahydrofuran oder beliebigen Mischungen aus diesen besteht.

19. Synthesemittel nach Anspruch 18, **dadurch gekennzeichnet, dass**:
- die Lithiumhalogenide ausgewählt sind aus der Gruppe Lithiumchlorid, Lithiumbromid und Lithiumiodid,
- das Lösemittel aus Dimethylether, Diethylether, Dibutylether, Methyl-tert-Butylether, Cyclopentylmethylether, Tetrahydrofuran, 2-Methyltetrahydrofuran, oder beliebigen Mischungen von mindestens zwei dieser Stoffe ausgewählt ist, und
- R, R¹ und R² unabhängig voneinander ausgewählt sind aus: methyl, ethyl, isopropyl, n-propyl, n-butyl, iso-butyl, sec-butyl, tert-butyl, n-pentyl, n-hexyl, n-heptyl, n-octyl, cyclopropyl, cyclopentyl, cyclohexyl, phenyl, benzyl.

20. Synthesemittel nach mindestens einem der Ansprüche 18 oder 19 **dadurch gekennzeichnet, dass** es sich bei der Diorganomagnesiumverbindung um eine Dialkyl-, Dialkenyl-, Dialkinyl-, Diaryl-, Diheteroaryl-, Alkylalkenyl-, Alkylalkinyl-, Alkylaryl-, Alkylheteroaryl-, Alkenylalkinyl-, Alkenylaryl-, Alkenylheteroaryl-, Alkinylaryl- oder Alkinylheteroarylmagnesiumverbindung, bevorzugt um eine Di-n-Alkyl-, Di-sec-Alkyl-, Di-iso-Alkyl-, Di-tert-Alkyl-, Di-cycloalkyl-, Di-aryl- und Diheteroaryl-magnesiumverbindung, besonders bevorzugt um Diethylmagnesium, Di-iso-propylmagnesium, Di-n-propylmagnesium, Di-n-Butylmagnesium, Di-secbutylmagnesium, Di-iso-butylmagnesium, Di-tert-butylmagnesium, Di-cyclopropylmagnesium, Di-cyclo-pentylmagnesium, Di-cyclo-hexylmagnesium, Di-n-pentylmagnesium, Di-n-hexylmagnesium, Diphenylmagnesium, Dibenzylmagnesium, n-Butyl-n-ocytlmagnesium, n-Butyl-ethylmagnesium, s-Butyl-ethylmagnesium oder s-Butyl-n-butylmagnesium handelt.

21. Verwendung des Synthesemittels gemäß mindestens einem der Ansprüche 18 bis 20 in der Synthesechemie, bevorzugt in der organischen Chemie und metallorganischen Chemie.

22. Verwendung nach Anspruch 21, **dadurch gekennzeichnet, dass** das Synthesemittel in Halogen/Metall-Austauschreaktionen, in Metallierungsreaktionen, bevorzugt in ortho-Metallierungsreaktionen, in Transmetallierungsreaktionen, zur Herstellung von Organozinkhalogeniden oder Diorganozinkverbindungen, Magnesiumalkoholaten oder Magnesiumhalogeniden eingesetzt wird.

## Claims

1. A process for the preparation of diorganomagnesium-containing synthesis agents and mixtures thereof with alkali-metal salts, **characterised in that** an alkali metal or mixtures or alloys of alkali metals, a Grignard compound of the general formula RMgX or a plurality of Grignard compounds of the general formulae R¹MgX, R²MgX and R³MgX, an organic halide of the general formula RX or a plurality of organic halides of the general formulae R¹X, R²X and R³X are reacted together, wherein:
- R, R¹, R² and R³, which may be identical or different, can be chosen from H, saturated, unsaturated, branched, unbranched, functionalised, unfunctionalised, aliphatic, cyclic, heterocyclic or aromatic organic fragments, preferably fragments having from 1 to 80, particularly preferably from 1 to 40, very particularly preferably from 1 to 20 carbon atoms, and
- X is chosen from chlorine, bromine, iodine, tosylate or triflate, preferably from chlorine, bromine and iodine,
wherein the reaction takes place solely in ethers and there are used for the preparation one or more different Grignard compounds RMgX or R¹MgX, R²MgX and/or R³MgX in ethers, and the alkali metal or the alkali metal and magnesium is/are suspended in ethers.

2. A process according to claim 1, **characterised in that** R, R¹, R² and R³, which may be identical or different, can be chosen from methyl, ethyl, cyclopropyl, cyclopentyl, cyclohexyl, phenyl, benzyl and heteroaryl fragments as well as branched and unbranched propyl, butyl, pentyl, hexyl, heptyl, octyl fragments.

3. A process according to claim 1 or 2, **characterised in that** magnesium is additionally added.

4. A process according to at least one of claims 1 to 3, **characterised in that** the alkali metal is lithium or mixtures or alloys consisting of lithium and another alkali metal, preferably sodium, wherein the amount of lithium in the mixtures or alloys is from 50 to 99.99 wt.%, preferably from 80 to 99.99 wt.%, more preferably from 90 to 99.99 wt.%.

5. A process according to at least one of claims 1 to 4, **characterised in that** the molar ratio of the total amount of alkali metal to the total amount of compounds of the general formulae RX, R¹X, R²X and R³X is 2n/(n+m), the molar ratio of magnesium to the total amount of compounds of the general formulae RX, R¹X, R²X and R³X is m/(n+m), and the molar ratio of the total amount of compounds of the general formulae RMgX, R¹MgX, R²MgX and R³MgX to the total amount of compounds of the general formulae RX, R¹X, R²X and R³X is (p-m)/(n+m), wherein n is chosen between n = 0.1 and n = 5, preferably between n = 0.8 and n = 3, and m is chosen between m = 0 and m = 5, preferably between m = 0 and m = 3, and (p-m) > 0 and p is chosen between p = 0 and p = 10, preferably between p = 0 and p = 6.

6. A process according to at least one of claims 1 to 5, **characterised in that** n is chosen between n = 0.8 and n = 1.8, preferably between n = 0.8 and n = 1.2, and m is chosen between m = 0 and m = 1, preferably between m = 0 and m = 0.5, and (p-m) > 0 and p is chosen between p = 0 and p = 3, preferably between p = 0 and p = 1.5.

7. A process according to at least one of claims 1 to 5, **characterised in that** for n ≥ m preferably p ≥ n and for n ≤ m preferably p ≥ m.

8. A process according to at least one of claims 1 to 5, **characterised in that** n ≥ m and p ≤ n.

9. A process according to at least one of claims 1 to 8, **characterised in that** for the preparation of identically substituted diorganomagnesium-containing synthesis agents and mixtures thereof with alkali-metal salts there are used a Grignard compound RMgX and an organic halide RX.

10. A process according to at least one of claims 1 to 8, **characterised in that** for the preparation of differently substituted diorganomagnesium-containing synthesis agents and mixtures thereof with alkali-metal salts there are used x • R¹MgX and y • R²MgX Grignard compounds and organic halide z • R³X, wherein x and y are chosen independently of one another between 0 and (p-m) and wherein the sum of x+y = (p-m) and wherein z is chosen between 0 and (n+m) and wherein R¹ = R² ≠ R³ or R¹ = R³ ≠ R² or R² = R³ ≠ R¹ or R¹ ≠ R² ≠ R³.

11. A process according to at least one of claims 1 to 8, **characterised in that** for the preparation of differently substituted diorganomagnesium-containing synthesis agents and mixtures thereof with alkali-metal salts there are used x • R¹X and y • R²X organic halides and Grignard compound z • R³MgX, wherein x and y are chosen independently of one another between 0 and (n+m) and wherein the sum of x+y = (n+m) and wherein z is chosen between 0 and (p-m) and wherein R¹ = R² ≠ R³ or R¹ = R³ ≠ R² or R² = R³ ≠ R¹ or R¹ ≠ R² ≠ R³.

12. A process according to at least one of claims 1 to 11, **characterised in that** the ratio of the rate of addition of the total amount of organic halides RX, R¹X, R²X, R³X to the rate of addition of the total amount of Grignard compounds RMgX, R¹MgX, R²MgX, R³MgX is chosen between 1:50 and 50:1, preferably between 1:20 and 20:1, particularly preferably between 1:10 and 10:1, very particularly preferably between 1:5 and 5:1.

13. A process according to at least one of claims 1 to 12, **characterised in that** the lithium or the lithium-containing alloys or mixtures are used in the form of a metal powder, a metal dispersion or metal granules, preferably in the form of a metal powder or a metal dispersion.

14. A process according to at least one of claims 1 to 13, **characterised in that** the magnesium is preferably used in the form of turnings, flakes or powders.

15. A process according to at least one of claims 1 to 14, **characterised in that** the Grignard compounds RMgX or R¹MgX, R²MgX and/or R³MgX and the organic halides RX or R¹X, R²X and/or R³X are added to a suspension of the alkali metal or of the alkali metal and magnesium.

16. A process according to at least one of claims 1 to 15, **characterised in that** there are used as ethers dimethyl ether, diethyl ether, dibutyl ether, methyl tert-butyl ether, cyclopentyl methyl ether, tetrahydrofuran or 2-methyltetrahydrofuran, preferably THF and/or 2-methyl-THF.

17. A process according to at least one of claims 1 to 16, **characterised in that** it is carried out at temperatures of from -100°C to the boiling point of the reaction suspension, preferably at temperatures of from -15°C to the boiling point of the reaction suspension, particularly preferably from 0°C to 60°C.

18. A synthesis agent which comprises a diorganomagnesium compound Rₓ¹R_{y}²Mg in the form of a solution in an ether-containing solvent and which can be prepared according to at least one of claims 1 to 17, **characterised in that** the diorganomagnesium compound is in admixture with lithium halides and/or Grignard compounds RMgX and/or alkali-metal organyls RM and the molar ratio of diorganomagnesium compounds to lithium halide is from 1:0.1 to 1:2 and the molar mixing ratio of diorganomagnesium compound with Grignard compound or alkali-metal organyl is from 1:0.15 to 1:4 and the sum of x + y = 2 and x and y are chosen independently of one another from the range between 0 and 2, wherein the solvent contains tetrahydrofuran and/or 2-methyltetrahydrofuran or consists of tetrahydrofuran or 2-methyltetrahydrofuran or any desired mixtures thereof.

19. A synthesis agent according to claim 18, **characterised in that**:
- the lithium halides are chosen from the group lithium chloride, lithium bromide and lithium iodide;
- the solvent is chosen from dimethyl ether, diethyl ether, dibutyl ether, methyl tert-butyl ether, cyclopentyl methyl ether, tetrahydrofuran, 2-methyltetrahydrofuran or any desired mixtures of at least two of these substances, and
- R, R¹ and R² are chosen independently of one another from: methyl, ethyl, isopropyl, n-propyl, n-butyl, isobutyl, sec-butyl, tert-butyl, n-pentyl, n-hexyl, n-heptyl, n-octyl, cyclopropyl, cyclopentyl, cyclohexyl, phenyl, benzyl.

20. A synthesis agent according to at least one of claims 18 or 19, **characterised in that** the diorganomagnesium compound is a dialkyl-, dialkenyl-, dialkynyl-, diaryl-diheteroaryl-, alkylalkenyl-, alkylalkynyl-, alkylaryl-alkylheteroaryl-, alkenylalkynyl-, alkenylaryl-, alkenylheteroaryl-, alkynylaryl- or alkynylheteroaryl-magnesium compound, preferably a di-n-alkyl-, di-sec-alkyl-, di-iso-alkyl-, di-tert-alkyl-, di-cycloalkyl-, di-aryl- and di-heteroaryl-magnesium compound, particularly preferably diethylmagnesium, di-isopropylmagnesium, di-n-propylmagnesium, di-n-butylmagnesium, di-sec-butylmagnesium, di-isobutylmagnesium, di-tert-butyl-magnesium, di-cyclo-propylmagnesium, di-cyclopentyl-magnesium, di-cyclo-hexylmagnesium, di-n-pentylmagnesium, di-n-hexylmagnesium, diphenyl-magnesium, dibenzylmagnesium, n-butyl-n-octylmagnesium, n-butyl-ethylmagnesium, s-butyl-ethylmagnesium or s-butyl-n-butylmagnesium.

21. Use of the synthesis agent according to at least one of claims 18 to 20 in synthetic chemistry, preferably in organic chemistry and organometallic chemistry.

22. Use according to claim 21, **characterised in that** the synthesis agent is used in halogen/metal exchange reactions, in metallation reactions, preferably in ortho-metallation reactions, in transmetallation reactions, in the preparation of organozinc halides or diorganozinc compounds, magnesium alcoholates or magnesium halides.

## Revendications

1. Procédé de préparation d'agents de synthèse contenant des composés de type diorgano-magnésium et de mélanges de tels agents avec des sels de métal alcalin, **caractérisé en ce que** l'on fait réagir les uns avec les autres un métal alcalin ou un mélange ou un alliage de métaux alcalins, un réactif de Grignard de formule générale RMgX ou plusieurs réactifs de Grignard de formules générales R¹MgX, R²MgX et R³MgX, et un halogénure organique de formule générale RX ou plusieurs halogénures organiques de formules générales R¹X, R²X et R³X, étant entendu que :
- R, R¹, R² et R³ représentent des entités qui peuvent être identiques ou différentes et qui sont choisies chacune parmi un atome d'hydrogène et des fragments organiques saturés ou insaturés, ramifiés ou non ramifiés, fonctionnalisés ou non fonctionnalisés, aliphatiques, cycliques, hétérocycliques ou aromatiques, lesquels fragments comportent de préférence de 1 à 80, mieux encore de 1 à 40 et surtout de 1 à 20 atomes de carbone,
- et X représente une entité choisie parmi les atomes de chlore, de brome et d'iode et les groupes tosylate et triflate, et de préférence, parmi les atomes de chlore, de brome et d'iode,
et **en ce que** la réaction a lieu exclusivement dans des éthers et, pour la préparation, on utilise un réactif de Grignard ou plusieurs réactifs de Grignard différents, RMgX ou bien R¹MgX, R²MgX et/ou R³MgX, dans des éthers, et le métal alcalin, ou le métal alcalin et du magnésium, se trouve(nt) en suspension dans des éthers.

2. Procédé conforme à la revendication 1, **caractérisé en ce que** R, R¹, R² et R³ représentent des entités qui peuvent être identiques ou différentes et qui sont choisies chacune parmi les fragments méthyle, éthyle, cyclopropyle, cyclopentyle, cyclohexyle, phényle, benzyle et hétéroaryle et les fragments propyle, butyle, pentyle, hexyle, heptyle et octyle, ramifiés ou non ramifiés.

3. Procédé conforme à la revendication 1 ou 2, **caractérisé en ce que** l'on ajoute du magnésium en plus.

4. Procédé conforme à l'une au moins des revendications 1 à 3, **caractérisé en ce que** le métal alcalin est du lithium ou un mélange ou alliage constitué de lithium et d'un autre métal alcalin, de préférence du sodium, dans lequel mélange ou alliage la proportion de lithium vaut de 50 à 99,99 % en poids, de préférence de 80 à 99,99 % en poids et mieux encore de 90 à 99,99 % en poids.

5. Procédé conforme à l'une au moins des revendications 1 à 4, **caractérisé en ce que** le rapport molaire de la quantité totale de métal alcalin à la quantité totale de composés de formules générales RX, R¹X, R²X et R³X vaut 2n/(n+m), le rapport molaire du magnésium à la quantité totale de composés de formules générales RX, R¹X, R²X et R³X vaut m/(n+m), et le rapport molaire de la quantité totale de composés de formules générales RMgX, R¹MgX, R²MgX et R³MgX à la quantité totale de composés de formules générales RX, R¹X, R²X et R³X vaut (p-m)/(n+m), étant entendu que n est un nombre choisi entre 0,1 et 5 et de préférence entre 0,8 et 3, que m est un nombre choisi entre 0 et 5 et de préférence entre 0 et 3, et que p est un nombre tel que la différence (p-m) soit strictement positive et qui est choisi entre 0 et 10 et de préférence entre 0 et 6.

6. Procédé conforme à l'une au moins des revendications 1 à 5, **caractérisé en ce que** n est choisi entre 0,8 et 1,8 et de préférence entre 0,8 et 1,2, m est choisi entre 0 et 1 et de préférence entre 0 et 0,5, et p est tel que la différence (p-m) soit strictement positive et choisi entre 0 et 3 et de préférence entre 0 et 1,5.

7. Procédé conforme à l'une au moins des revendications 1 à 5, **caractérisé en ce que**, si n est supérieur ou égal à m, p est de préférence supérieur ou égal à n, et si n est inférieur ou égal à m, p est de préférence supérieur ou égal à m.

8. Procédé conforme à l'une au moins des revendications 1 à 5, **caractérisé en ce que** n est supérieur ou égal à m et p est inférieur ou égal à n.

9. Procédé conforme à l'une au moins des revendications 1 à 8, **caractérisé en ce que**, pour préparer des agents de synthèse contenant des composés de type diorgano-magnésium à substituants de même type et des mélanges de tels agents avec des sels de métal alcalin, on utilise un réactif de Grignard de formule RMgX et un halogénure organique de formule RX.

10. Procédé conforme à l'une au moins des revendications 1 à 8, **caractérisé en ce que**, pour préparer des agents de synthèse contenant des composés de type diorgano-magnésium à substituants différents et des mélanges de tels agents avec des sels de métal alcalin, on utilise des réactifs de Grignard, x•R¹MgX et y•R²MgX, et un halogénure organique, z•R³X, où x et y sont des nombres choisis, indépendamment l'un de l'autre, entre 0 et (p-m), étant entendu que la somme x+y est égale à (p-m), et z est un nombre choisi entre 0 et (n+m), et où R¹ est identique à R² et différent de R³, ou bien R¹ est identique à R³ et différent de R², ou bien R² est identique à R³ et différent de R¹, ou bien R¹, R² et R³ sont tous différents les uns des autres.

11. Procédé conforme à l'une au moins des revendications 1 à 8, **caractérisé en ce que**, pour préparer des agents de synthèse contenant des composés de type diorgano-magnésium à substituants différents et des mélanges de tels agents avec des sels de métal alcalin, on utilise des halogénures organiques, x•R¹X et y•R²X, et un réactif de Grignard, z•R³MgX, où x et y sont des nombres choisis, indépendamment l'un de l'autre, entre 0 et (n+m), étant entendu que la somme x+y est égale à (n+m), et z est un nombre choisi entre 0 et (p-m), et où R¹ est identique à R² et différent de R³, ou bien R¹ est identique à R³ et différent de R², ou bien R² est identique à R³ et différent de R¹, ou bien R¹, R² et R³ sont tous différents les uns des autres.

12. Procédé conforme à l'une au moins des revendications 1 à 11, **caractérisé en ce que** le rapport des vitesses d'addition de l'ensemble des halogénures organiques RX, R¹X, R²X et R³X à celles de l'ensemble des réactifs de Grignard RMgX, R¹MgX, R²MgX et R³MgX est un nombre choisi entre 1/50 et 50/1, de préférence entre 1/20 et 20/1, mieux encore entre 1/10 et 10/1 et surtout entre 1/5 et 5/1.

13. Procédé conforme à l'une au moins des revendications 1 à 12, **caractérisé en ce que** le lithium ou les alliages ou mélanges contenant du lithium est ou sont utilisé(s) sont forme de métal en poudre, de dispersion de métal ou de granulat métallique, et de préférence sous forme de métal en poudre ou de dispersion de métal.

14. Procédé conforme à l'une au moins des revendications 1 à 13, **caractérisé en ce que** le magnésium est utilisé de préférence sous forme de copeaux, de tournures ou de poudre.

15. Procédé conforme à l'une au moins des revendications 1 à 14, **caractérisé en ce que** le ou les réactif(s) de Grignard RMgX ou R¹MgX, R²MgX et/ou R³MgX et le ou les halogénure(s) organique(s) RX ou R¹X, R²X et/ou R³X sont ajoutés à une suspension du métal alcalin ou à une suspension du métal alcalin et de magnésium.

16. Procédé conforme à l'une au moins des revendications 1 à 15, **caractérisé en ce que** l'on utilise comme éther du diméthyl-éther, du diéthyl-éther, du dibutyl-éther, du méthyl-tertiobutyl-éther, du cyclopentyl-méthyl-éther, du tétrahydrofurane ou du 2-méthyl-tétra-hydrofurane, et de préférence du tétrahydrofurane et/ou du 2-méthyl-tétrahydrofurane.

17. Procédé conforme à l'une au moins des revendications 1 à 16, **caractérisé en ce que** l'on opère à des températures situées entre -100 °C et le point d'ébullition de la suspension réactionnelle, de préférence à des températures situées entre -100 °C et le point d'ébullition de la suspension réactionnelle, et mieux encore entre 0 °C et 60 °C.

18. Agent de synthèse contenant un composé de type diorgano-magnésium R¹ₓR²_{y}Mg en solution dans un solvant à base d'éther, qui peut être préparé conformément à l'une au moins des revendications 1 à 17, **caractérisé en ce que** le composé de type diorgano-magnésium se présente en mélange avec des halogénures de lithium et/ou des réactifs de Grignard de formule RMgX et/ou des organyl-alcalins de formule RM, que le rapport molaire entre le composé de type diorgano-magnésium et l'halogénure de lithium vaut entre 1/0,1 et 1/2 et le rapport molaire entre le composé de type diorgano-magnésium et le réactif de Grignard et/ou l'organyl-alcalin vaut entre 1/0,15 et 1/4, que les indices x et y sont des nombres choisis, indépendamment l'un de l'autre, dans l'intervalle situé entre 0 et 2 et la somme x+y vaut 2, et que le solvant contient du tétrahydrofurane et/ou du 2-méthyl-tétrahydrofurane ou est constitué de tétrahydrofurane ou de 2-méthyl-tétrahydrofurane, ou d'un mélange de ceux-ci en proportions quelconques.

19. Agent de synthèse conforme à la revendication 18, **caractérisé en ce que** :
- les halogénures de lithium sont choisis dans l'ensemble formé par les chlorure de lithium, bromure de lithium et iodure de lithium,
- le solvant est choisi parmi les diméthyl-éther, diéthyl-éther, dibutyl-éther, méthyl-tertiobutyl-éther, cyclopentyl-méthyl-éther, tétrahydrofurane et 2-méthyl-tétrahydrofurane, et n'importe quel mélange d'au moins deux de ces composés,
- et les entités symbolisées par R, R¹ et R² sont choisies, indépendamment les unes des autres, parmi les groupes méthyle, éthyle, iso-propyle, n-propyle, n-butyle, isobutyle, sec-butyle, tertiobutyle, n-pentyle, n-hexyle, n-heptyle, n-octyle, cyclopropyle, cyclopentyle, cyclohexyle, phényle et benzyle.

20. Agent de synthèse conforme à l'une au moins des revendications 18 et 19, **caractérisé en ce que** le composé de type diorgano-magnésium est un composé de type dialkyl-magnésium, dialcényl-magnésium, dialcynyl-magnésium, diaryl-magnésium, dihétéroaryl-magnésium, alkyl-alcényl-magnésium, alkyl-alcynyl-magnésium, alkyl-aryl-magnésium, alkyl-hétéroaryl-magnésium, alcényl-alcynyl-magnésium, alcényl-aryl-magnésium, alcényl-hétéroaryl-magnésium, alcynyl-aryl-magnésium ou alcynyl-hétéroaryl-magnésium, de préférence un composé de type di-n-alkyl-magnésium, di-sec-alkyl-magnésium, diiso-alkyl-magnésium, ditertioalkyl-magnésium, dicycloalkyl-magnésium, diaryl-magnésium ou dihétéroaryl-magnésium, et surtout du diéthyl-magnésium, du diisopropyl-magnésium, du di-n-propyl-magnésium, du di-n-butyl-magnésium, du di-sec-butyl-magnésium, du diisobutyl-magnésium, du ditertiobutyl-magnésium, du dicyclopropyl-magnésium, du dicyclopentyl-magnésium, du dicyclohexyl-magnésium, du di-n-pentyl-magnésium, du di-n-hexyl-magnésium, du diphényl-magnésium, du dibenzyl-magnésium, du n-butyl-n-octyl-magnésium, du n-butyl-éthyl-magnésium, du sec-butyl-éthyl-magnésium ou du sec-butyl-n-butyl-magnésium.

21. Utilisation d'un agent de synthèse conforme à l'une au moins des revendications 18 à 20 en chimie de synthèse, de préférence en chimie organique et en chimie organo-métallique.

22. Utilisation conforme à la revendication 21, **caractérisée en ce que** l'agent de synthèse est utilisé dans des réactions d'échange halogène/métal, dans des réactions de métallation et de préférence d'ortho-métallation, dans des réactions de trans-métallation, ou pour la préparation d'halogénures d'organo-zinc ou de composés de type diorgano-zinc, d'alcoolates de magnésium ou d'halogénures de magnésium.
